# EUROPEAN PATENT APPLICATION

(11) **EP 4 579 510 A1**
(43) Date of publication of application: **02.07.2025**
(21) Application number: 23867351.1
(22) Date of filing: 13.09.2023
(51) Int. Cl.: G06F 30/18

(54) **COMMUNICATION METHOD, ELECTRONIC DEVICE AND READABLE STORAGE MEDIUM**

(30) Priority: 23.09.2022 CN 202211166857
(71) Applicant: Huawei Technologies Co., Ltd., Shenzhen, Guangdong 518129 (CN)
(72) Inventor: ZHU, Yanhong, Shenzhen, Guangdong 518129 (CN); DING, Rentian, Shenzhen, Guangdong 518129 (CN)
(74) Representative: Isarpatent
(86) International application number: PCT/CN2023/118411
(87) International publication number: WO 2024/061062

(57) **Abstract**

Embodiments of this application provide a communication method, an electronic device, and a readable storage medium. Both a first device and a second device are ultra-wideband devices. In the method, a first initial location of the first device, a field of view of the first device, location information of the second device, and a field of view of the second device are obtained; first radar coverage of the first device is displayed in a spatial layout diagram of a target area based on the first initial location of the first device and the field of view of the first device, and second radar coverage of the second device is displayed in the spatial layout diagram based on the location information of the second device and the field of view of the second device; and if it is detected, based on the first radar coverage and the second radar coverage, that there is a need to adjust a location of the first device and/or a location of the second device, first prompt information is output, where the first prompt information is used to prompt a user to adjust the location of the first device and/or the location of the second device. In this application, the user can deploy a radar device, and efficiency is high.

## Description

This application claims priority to Chinese Patent Application No. 202211166857.1, filed with the China National Intellectual Property Administration on September 23, 2022 and entitled "COMMUNICATION METHOD, ELECTRONIC DEVICE, AND READABLE STORAGE MEDIUM", which is incorporated herein by reference in its entirety.

### TECHNICAL FIELD

Embodiments of this application relate to the field of communication technologies, and in particular, to a communication method, an electronic device, and a readable storage medium.

### BACKGROUND

There is a strong demand for target detection, motion detection, and the like in a plurality of scenarios such as a whole-house intelligence scenario and a driving scenario. For example, in the whole-house intelligence scenario, a radar device may be deployed in a room, and the radar device may transmit radar pulses for target detection, motion detection, and the like.

Currently, during deployment of a radar device, the radar device needs to be installed and deployed by a professional person, which is inefficient.

### SUMMARY

Embodiments of this application provide a communication method, an electronic device, and a readable storage medium, so that a user can deploy a radar device, and deployment efficiency is high.

According to a first aspect, an embodiment of this application provides a communication method. An entity for executing the communication method may be a control device or a first device. Both the first device and a second device are ultra-wideband devices, and both the first device and the second device are located in a target area. The target area is, for example, a home, a factory, or a classroom. This is not limited in embodiments of this application. In an example, the first device may be in wired connection or wireless connection to the second device, and the first device and the second device may communicate with each other. When the control device is the entity for executing the method, the control device may be in wired connection or wireless connection to the first device and the second device.

An example in which the first device is the entity for executing the method is used. When a user deploys the first device and the second device, the first device may obtain a first initial location of the first device, a field of view of the first device, location information of the second device, and a field of view of the second device. The first device may localize the second device, to obtain the location information of the second device, and the first device may interact with the second device, to obtain the field of view of the second device. The first initial location of the first device may be predefined, input by the user, or sent by the second device to the first device after the second device localizes the first device.

The first device may display first radar coverage of the first device in a spatial layout diagram of the target area based on the first initial location of the first device and the field of view of the first device, and display second radar coverage of the second device in the spatial layout diagram based on the location information of the second device and the field of view of the second device. In this way, the user can view, on the first device, the first radar coverage of the deployed first device and the second radar coverage of the deployed second device.

The first device may detect, based on the first radar coverage and the second radar coverage, whether there is a need to adjust a location of the first device and/or a location of the second device, so that the target area is covered wider by the first radar coverage and the second radar coverage and does not include a blind area of coverage. If it is detected that there is a need to adjust the location of the first device and/or the location of the second device, the first device outputs first prompt information. The first prompt information is used to prompt the user to adjust the location of the first device and/or the location of the second device.

Herein, an example in which the control device is the entity for executing the method is used to describe the control device obtaining the first initial location of the first device, the field of view of the first device, the location information of the second device, and the field of view of the second device.

When the user deploys the first device and the second device, the first device may localize the second device, to obtain the location information of the second device, and the second device may localize the first device, to obtain location information of the first device. The first device may send the location information of the second device and the field of view of the first device to the control device, and the second device may send the location information of the first device and the field of view of the second device to the control device. In this way, the control device may obtain the first initial location of the first device, the field of view of the first device, the location information of the second device, and the field of view of the second device. The location information of the first device includes the first initial location.

Alternatively, the first device is a primary device, and the primary device is configured to exchange data with the control device. In this example, the first device may localize the second device, to obtain the location information of the second device, and the second device may localize the first device, to obtain the location information of the first device. The second device may send the location information of the first device and the field of view of the second device to the first device, and the first device may send the location information of the first device, the location information of the second device, the field of view of the first device, and the field of view of the second device to the control device. In this way, the control device may also obtain the first initial location of the first device, the field of view of the first device, the location information of the second device, and the field of view of the second device. The location information of the first device includes the first initial location.

The first device is used as an example. In this embodiment of this application, the first device may obtain the first initial location of the to-be-deployed first device and the location information of the to-be-deployed second device through localization. There is no need for the user to measure location information of a to-be-deployed radar device, efficiency is high, and accuracy is high. In addition, the first device may determine coverage of the first device and the second device based on the first initial location of the first device, the field of view of the first device, the location information of the second device, and the field of view of the second device, and prompt the user to adjust the location of the first device and/or the location of the second device. In this way, the user can deploy the first device and the second device under prompting of the first device, with no need for on-site deployment by a professional person, and deployment efficiency is high.

An example in which the first device is the entity for executing the method is used below for description.

In a possible implementation, the first device may provide an interface for interacting with the user. When the user deploys the first device and the second device, the first device may display the spatial layout diagram of the target area. When the spatial layout diagram of the target area is pre-stored in the first device, the first device may directly display the spatial layout diagram of the target area. When the spatial layout diagram of the target area is not stored in the first device, the first device may output second prompt information, to prompt the user to input the spatial layout diagram of the target area. After the user inputs the spatial layout diagram of the target area, the first device may display the spatial layout diagram of the target area.

An objective of displaying the spatial layout diagram of the target area by the first device is to help the user determine the first initial location. The first device may display the first initial location in the spatial layout diagram in response to a first operation of the user. For example, the first device may tap a location in the spatial layout diagram of the target area, and the location is the first initial location that is of the first device and that is determined by the user.

An objective of determining the first initial location by the user is as follows: In an example, the first device localizes the second device, and obtained location information of the second device is location information relative to the first device, for example, a distance and an angle of the second device relative to the first device. After the first initial location is determined, the first device may determine a second initial location of the second device based on the location information of the second device obtained by the first device through localization.

In this implementation, when deploying the first device and the second device, the user may first determine the first initial location of the first device in the spatial layout diagram of the target area. This helps the first device localize the second device, to obtain the second initial location of the second device in the target area.

In a possible implementation, a manner in which the first device detects, based on the first radar coverage and the second radar coverage, whether there is a need to adjust the location of the first device and/or the location of the second device may include:
In a first manner, when there is an overlap between the first radar coverage and the second radar coverage, it is determined that there is no need to adjust the location of the first device and/or the location of the second device. When there is no overlap between the first radar coverage and the second radar coverage, it is determined that there is a need to adjust the location of the first device and/or the location of the second device. In other words, when there is no uncovered area between the first radar coverage and the second radar coverage, it is determined that there is no need to adjust the location of the first device and/or the location of the second device.

In a second manner, the first device may detect, based on the target area, the first radar coverage, and the second radar coverage, whether a blind area of radar coverage exists in the target area. If a blind area of radar coverage exists in the target area, the first device determines that there is a need to adjust the location of the first device and/or the location of the second device. If no blind area of radar coverage exists in the target area, the first device determines that there is no need to adjust the location of the first device and/or the location of the second device. In other words, when an uncovered area exists in the target area, there is a need to adjust the location of the first device and/or the location of the second device.

In a possible implementation, the first prompt information output by the first device includes an adjusted location of the first device and/or an adjusted location of the second device. In this way, the user may determine, based on the first prompt information, a specific adjusted location of the first device and/or a specific adjusted location of the second device, so that wider coverage can be achieved, with no need for calculation by the user and on-site adjustment by a professional person.

In this embodiment, if the user installs or removes a radar device later, the first device or the control device may still be triggered to redeploy a radar device. In this way, efficiency is high, and deployment precision is high.

Herein, the user actively triggers redeployment of a radar device. In an example, the first device may further detect a radar device in the target area in real time, to automatically trigger redeployment of a radar device.

In this implementation, the first device may perform localization once at an interval of first preset duration, to detect whether an ultra-wideband device is added in the target area, whether an ultra-wideband device is removed from the target area, whether the location of the first device is changed, or whether the location of the second device is changed.

If an ultra-wideband device is added in the target area, an ultra-wideband device is removed from the target area, the location of the first device is changed, or the location of the second device is changed, radar coverage of an ultra-wideband device in the target area is determined based on a location and a field of view of the ultra-wideband device in the target area. The first device detects, based on the radar coverage of the ultra-wideband device in the target area, whether there is a need to adjust the location of the ultra-wideband device in the target area.

When an ultra-wideband device is added in the target area, the ultra-wideband device in the target area includes the first device, the second device, and the added ultra-wideband device; when an ultra-wideband device is removed from the target area, the ultra-wideband device in the target area includes an unremoved device in the first device and the second device; or when the location of the first device or the location of the second device is changed, the ultra-wideband device in the target area includes the first device and the second device.

When the first device determines that there is a need to adjust the location of the ultra-wideband device in the target area, that is, the ultra-wideband device in the target area needs to be redeployed, the first device may output third prompt information. The third prompt information is used to prompt the user to adjust the location of the ultra-wideband device in the target area.

In this implementation, the first device may detect addition, removal, or a location change of an ultra-wideband in the target area, to automatically prompt the user to adjust a location of an ultra-wideband device. This is more intelligent.

A process of deploying the first device and the second device is described above. A method in which the first device and the second device collaborate to sense an object after deployment of the first device and the second device is completed is described below.

First, after deployment of the first device and the second device is completed, the first device may transmit a radar pulse, to sense an object in the target area. When sensing that the object does not move, the first device may send a listening indication to the second device. The listening indication indicates the second device to enter a listening state from a working state. The second device receives the listening indication from the first device. If the second device does not sense the object, the second device may enter the listening state from the working state. If the second device is also sensing the object, the second device may maintain the working state, to continue to sense the object.

After sending the listening indication to the second device, the first device may continue to sense the object, and send a wake-up indication to the second device when the object moves to the second radar coverage. The wake-up indication indicates the second device to enter the working state from the listening state, to continue to sense the object.

In this implementation, a location of the object may be detected, a device whose radar coverage is radar coverage in which the object is located senses the object, and another device may enter a listening state, to reduce power consumption of the device.

After sending the wake-up indication to the second device, the first device further needs to perform clock synchronization with the second device, to align data that is of the object and that is sensed by the first device and the second device. In addition, the first device further sends a configuration parameter of the first device to the second device, so that the second device adjusts a configuration parameter of the second device to be consistent with the configuration parameter of the first device. In this way, the second device and the first device collect data by using a same configuration parameter, to ensure accuracy of sensing. In addition, the first device may further send sensed data of the object to the second device, to ensure continuity of sensing the object.

In a possible implementation, after the second device senses the object for second preset duration, the second device may send a listening indication to the first device. The first device may enter a listening state from a working state in response to the listening indication, to reduce power consumption of the first device.

Second, in the foregoing example, the first device and the second device being located in the target area is used for description, and in an example, a third device is further located in the target area, and the third device is an ultra-wideband device. The first device, the second device, and the third device may communicate with each other, or the first device, the second device, and the third device may further communicate with the control device.

After the first device transmits a radar pulse, when it is sensed that the object moves, target devices that collaborate to sense the object need to be determined. When the first device is a primary device, the second device and the third device may send respective strength to the first device. In a possible implementation, a primary device may be determined by the user. For example, the first device may be determined as a primary device in response to an operation of determining the first device as a primary device by the user. Alternatively, a primary device may be determined by the first device, the second device, and the third device.

When there is no primary device in the first device, the second device, and the third device, the first device, the second device, and the third device may send respective strength to each other, to determine target devices that collaborate to sense the object.

For example, the first device is a primary device. The first device may receive second strength from the second device and third strength from the third device. The second strength is strength that is of a reflected radar signal and that is collected after the second device transmits a radar pulse, and the third strength is strength that is of a reflected radar signal and that is collected after the third device transmits a radar pulse. The first device determines, based on first strength from the first device, the second strength, and the third strength, at least two candidate devices whose strength is greater than a strength threshold. The first strength is strength that is of a reflected radar signal and that is collected after the first device transmits a radar pulse.

The first device connects every two devices in the at least two candidate devices, to obtain at least one connection line; and based on an included angle between a motion direction of the object and each connection line, uses two devices on a connection line that has a smallest included angle with the motion direction of the object as target devices. The target devices are configured to sense motion of the object.

In this implementation, the two devices on the connection line that has the smallest included angle with the motion direction of the object are used as the target devices, so that a result of the sensed object can be more accurately determined, to improve sensing precision.

When the target devices include the first device and the second device, the first device may perform clock synchronization with the second device, and the first device may send a configuration parameter of the first device to the second device, so that the second device adjusts a configuration parameter of the second device to be consistent with the configuration parameter of the first device. Because the first device and the second device collaborate to sense the object, the second device may send, to the first device, a second motion detection result that is of the object and that is sensed by the second device. A result that is of the object and that is sensed by the first device is a first motion detection result. The first device may obtain a motion detection result of the object through integration based on the first motion detection result that is of the object and that is sensed by the first device and the second motion detection result.

In this implementation, the first device may integrate motion detection results that are of the object and that are sensed by a plurality of devices, to obtain a more accurate detection result.

According to a second aspect, an embodiment of this application provides an electronic device. The electronic device may include a processor and a memory. The memory is configured to store computer-executable program code. The program code includes instructions. When the processor executes the instructions, the instructions enable the electronic device to perform the method according to the first aspect.

According to a third aspect, an embodiment of this application provides a computer program product including instructions. When the computer program product is run on a computer, the computer is enabled to perform the method according to the first aspect.

According to a fourth aspect, an embodiment of this application provides a computer-readable storage medium. The computer-readable storage medium stores instructions. When the instructions are run on a computer, the computer is enabled to perform the method according to the first aspect.

For beneficial effects of possible implementations of the second aspect to the fourth aspect, refer to beneficial effects brought by the first aspect. Details are not described herein again.

### BRIEF DESCRIPTION OF DRAWINGS

FIG. 1 is a diagram of an existing system architecture of radar sensing;
FIG. 2A is a diagram of a system architecture according to an embodiment of this application;
FIG. 2B is a diagram of another system architecture according to an embodiment of this application;
FIG. 3A is a schematic flowchart of an embodiment of a communication method according to an embodiment of this application;
FIG. 3B is a schematic flowchart of another embodiment of a communication method according to an embodiment of this application;
FIG. 4 is a diagram of an interface for a UWB device to access an AP according to an embodiment of this application;
FIG. 5 is a diagram of an interface for deploying a UWB device according to an embodiment of this application;
FIG. 6A is a diagram of radar coverage according to an embodiment of this application;
FIG. 6B is a diagram in which deployment of a UWB device is adjusted according to an embodiment of this application;
FIG. 7A and FIG. 7B are a schematic flowchart of another embodiment of a communication method according to an embodiment of this application;
FIG. 8 is a diagram in which deployment of a UWB device is adjusted according to an embodiment of this application;
FIG. 9 is a schematic flowchart of another embodiment of a communication method according to an embodiment of this application;
FIG. 10 is a diagram of collaborative sensing by UWB devices according to an embodiment of this application;
FIG. 11 is a schematic flowchart of another embodiment of a communication method according to an embodiment of this application;
FIG. 12A is a diagram of a connection line between every two UWB devices according to an embodiment of this application;
FIG. 12B is another diagram of collaborative sensing by UWB devices according to an embodiment of this application;
FIG. 12C is another diagram of collaborative sensing by UWB devices according to an embodiment of this application; and
FIG. 13 is a diagram of a structure of an electronic device according to an embodiment of this application.

### DESCRIPTION OF EMBODIMENTS

Radar sensing technologies have been widely applied to various scenarios, such as a whole-house intelligence scenario, a driving scenario, and a smart factory scenario. A basic principle of radar sensing is as follows: A radar device transmits a radar pulse, the radar pulse may be reflected when encountering an object, a person, or the like, and the radar device may sense a surrounding environment of the radar device based on a reflected radar signal. For example, in the driving scenario, a vehicle may transmit a radar pulse, and sense an object around the vehicle based on a reflected radar signal, to ensure safe driving.

In addition to object sensing, the radar sensing technologies may be used for identification of a posture of an object, motion detection, physical sign detection, and the like. For example, the radar device may continuously detect a distance between an object and the radar device based on a reflected radar signal, to detect motion of the object. The physical sign detection may include but is not limited to breathing detection, sleep detection, and heart rate detection. The breathing detection is used as an example. The radar device may sense a breathing frequency of an object based on a radar signal reflected at a thorax of the object. Functions of the radar sensing technologies are not exhaustively enumerated in embodiments of this application.

The whole-house intelligence scenario is used as an example. In the whole-house intelligence scenario, a plurality of radar devices may be deployed. The radar devices may be separately disposed, or may be integrated with a household appliance or furniture in the whole-house intelligence scenario. This is not limited in embodiments of this application. The radar device is usually deployed at a hard-to-reach location, such as a ceiling or a corner, making it difficult for a user to measure an installation location of the radar device. In addition, the user does not know coverage of each radar device, and cannot plan a location of each radar device. Improper deployment of the radar devices is likely to cause a problem such as incomplete radar coverage or interference between radar pulses. Currently, during deployment of a radar device, the radar device needs to be installed and deployed by a professional person, which is inefficient.

In addition, if the user purchases other radar devices later, the user cannot make these radar devices and a deployed radar device work in collaboration, which causes trouble to the user.

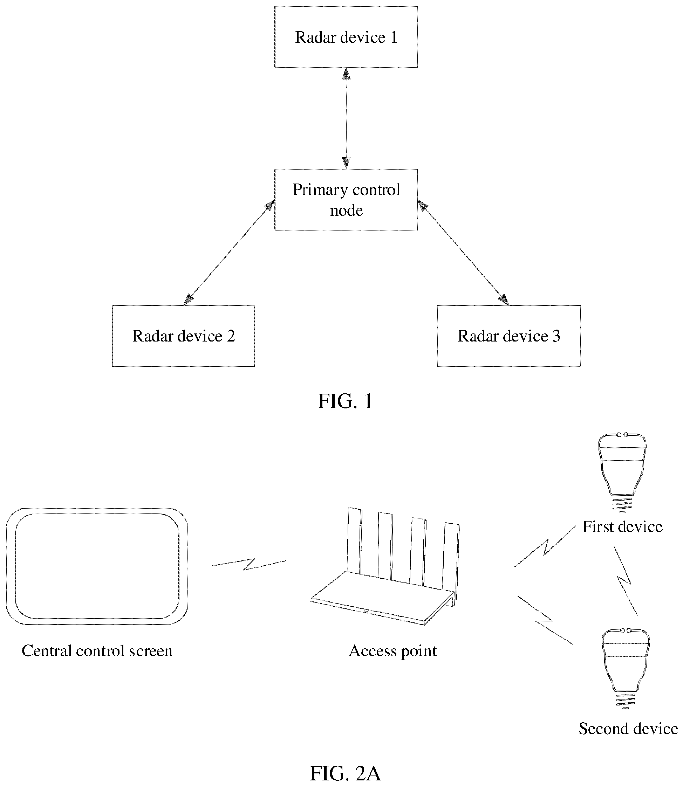

FIG. 1 is a diagram of an existing system architecture of radar sensing. Refer to FIG. 1. The system architecture may include a primary control node and N radar devices. In FIG. 1, an example in which the N radar devices include a radar device 1, a radar device 2, and a radar device 3 is used. All the radar devices in FIG. 1 are Doppler radars. No clock synchronization exists between the plurality of radar devices and between the radar device and the primary control node in FIG. 1. The primary control node is in wireless connection to each radar device, and the wireless connection is, for example, Bluetooth connection. A wireless connection manner is not limited in embodiments of this application. The plurality of radar devices work in a frequency division multiplexing manner, and the primary control node separately obtains, in a time division multiplexing polling manner, data collected by each radar device.

In the system architecture shown in FIG. 1, the radar device also needs to be installed and deployed by a professional person during deployment, and there is still a problem of inefficiency. In addition, when an object is moving, if the primary control node detects the object by controlling a corresponding radar to work, an air interface delay may cause a problem of delayed response. For this reason, the plurality of radar devices in FIG. 1 keep working, to detect the object in time. As a result, power consumption of the radar devices is high, and the plurality of radar devices can work simultaneously only when the radar devices use an anti-interference mechanism such as frequency division multiplexing or frequency hopping.

In addition, because no clock synchronization exists between the plurality of radar devices and between the radar device and the primary control node in FIG. 1, after the primary control node separately obtains the data collected by each radar device, the primary control node corrects, through interpolation, a delay error of the data collected by the plurality of radar devices. However, a radar pulse propagation speed is 3×10⁸ m/s, and interpolation time of 10 ns of the primary control node causes a distance error of 1.5 m, which causes poor accuracy of radar sensing. Therefore, time synchronization between the radar devices is crucial to the accuracy of radar sensing.

Currently, radar devices include a millimeter wave radar, an ultra-wideband (ultra-wideband, UWB) radar, and the like. In an example, the UWB radar may include but is not limited to an impulse radio ultra-wideband (impulse radio ultra-wideband, IR-UWB) radar, an orthogonal frequency division multiplexing (orthogonal frequency division multiplexing, OFDM) radar, and a stepped frequency radar (stepped frequency radar). A type of the UWB radar is not limited in embodiments of this application.

The millimeter wave radar is a radar operating in a millimeter wave (millimeter wave) band. For example, currently, a millimeter wave radar operating in a 24 GHz band exists, with an available bandwidth of 250 MHz. An available bandwidth for the millimeter wave radar is small, resulting in low distance resolution and a weak anti-interference capability of the millimeter wave radar. In addition, an operating band of the millimeter wave radar may cause a large transmission loss.

An operating band of the UWB radar is an 8 GHz band, a radar transmission loss is low, and an available bandwidth for the UWB radar is greater than 1.5 GHz. Compared with the millimeter wave radar, the UWB radar has higher distance resolution and stronger anti-interference capability. In addition, the UWB radar has a communication capability of up to 31.2 Mbps defined in the 802.15.4z protocol and a localization capability of centimeter-level precision, making it easier to implement point-to-point communication between radars. Therefore, ad hoc networking and deployment of UWB radars are easier to implement.

Embodiments of this application provide, based on a feature of a radar device, a communication method, and provide, based on a communication capability of a UWB radar, a method for UWB radars to interact with each other to perform ad hoc networking and a method for a UWB radar and a user to interact with each other to provide a deployment solution. The user may deploy a radar with no need for installation and deployment by a professional person, so that difficulty is reduced and deployment efficiency can be improved.

In the following embodiments, a first device and a second device are used as an example to describe a process in which devices perform ad hoc networking and a process of deploying the devices provided in embodiments of this application. It should be understood that both the first device and the second device are UWB devices, and both the first device and the second device have a localization function and a radar sensing function. An example in which the first device has a localization function is used for description. To be specific, the first device may localize another electronic device. It may be understood that the first device has a communication capability defined in the 802.15.4z protocol, and the first device may implement localization based on the communication capability. A principle of performing localization by the first device is not described in detail in embodiments of this application. For details, refer to descriptions in the 802.15.4z protocol. An example in which the first device has a radar sensing function is used for description. To be specific, the first device may transmit a radar pulse, to implement radar sensing, for example, object sensing, identification of a posture of an object, motion detection, physical sign detection, and the like.

In a whole-house intelligence scenario, forms of the first device and the second device may be the same or different. The first device is used as an example. The first device may be a household appliance or furniture in a home scenario, such as a central control screen, a smart screen, a television, a sound box, a light, or a router. The form of the first device is not specifically limited in embodiments of this application. The forms of the first device and the second device may be changed with an application scenario. For example, in a smart factory scenario, the first device may be a mechanical arm, a robot, or the like.

Before the communication method provided in embodiments of this application is described, a system architecture to which the communication method provided in embodiments of this application is applicable is described.

FIG. 2A is a diagram of a system architecture according to an embodiment of this application. Refer to FIG. 2A. The system architecture includes a central control screen, an access point (access point, AP), a first device, and a second device. In FIG. 2A, an example in which the access point is a router is used for description. The central control screen, the first device, and the second device may access the AP to access a network. It should be understood that in FIG. 2A, an example in which both the first device and the second device are lights is used for description.

The central control screen may be in wired connection or wireless connection to the AP. In an example, when the central control screen is in wired connection to the AP, the central control screen may be first connected to a smart host, and the smart host is connected to the AP by using a network cable, to implement the connection between the central control screen and the AP. The smart host is configured to transmit data exchanged between the central control screen and the AP. In FIG. 2A, an example in which the central control screen is in wireless connection to the AP is used for description.

The central control screen may provide an interface, to help a user control the first device and the second device. For example, both the first device and the second device are lights, and the user may operate the central control screen to turn on or turn off the lights. For example, a control for turning on a light may be displayed in the interface of the central control screen. When the user taps the control for turning on a light, the central control screen may be triggered to send an indication for turning on a light to the AP. In response to the indication for turning on a light, the AP may control a corresponding light to be turned on. A function of the central control screen and a specific implementation principle thereof are not described in detail in this embodiment of this application.

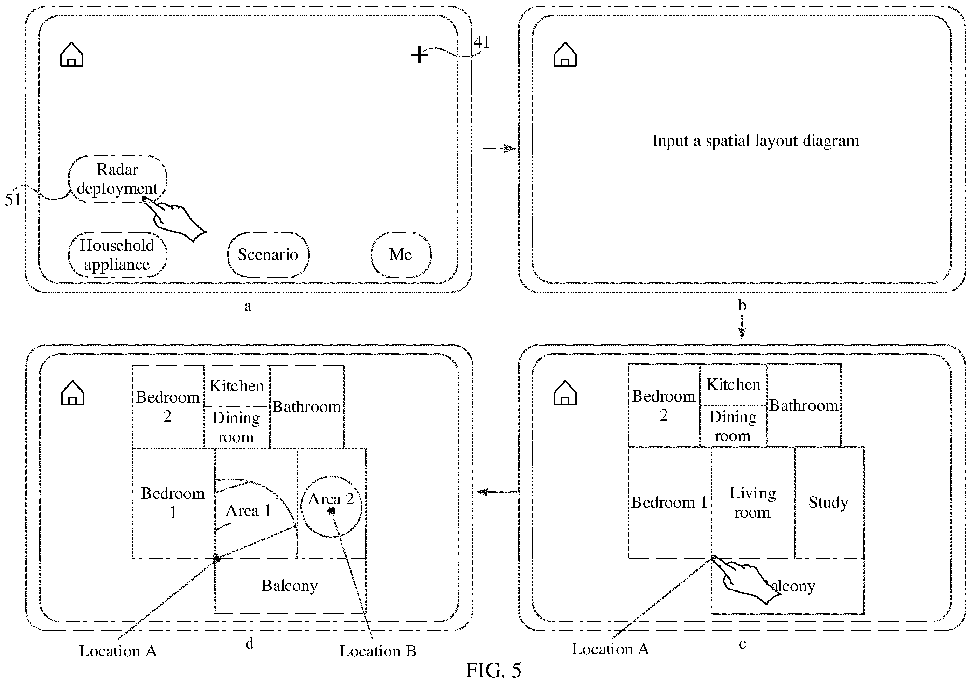

In this embodiment of this application, the central control screen is further configured to provide an interface for deploying the first device and the second device. For details, refer to related descriptions of FIG. 5.

In an example, with reference to FIG. 2A, the central control screen may alternatively be replaced with another device carrying a display, for example, a mobile phone or a notebook computer. A device such as a mobile phone or a notebook computer may also access the AP, and the user may control the first device and the second device on the device such as the mobile phone or the notebook computer, to deploy the first device and the second device.

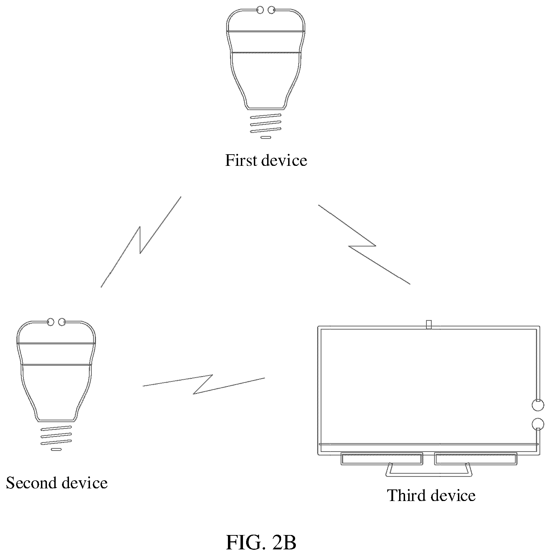

FIG. 2B is a diagram of another system architecture according to an embodiment of this application. Refer to FIG. 2B. The system architecture includes a first device and a second device. To show that UWBs can communicate with each other, FIG. 2B further shows a third device. The third device is also a UWB device. In FIG. 2B, an example in which the third device is a smart screen is used for description.

In the system architecture, the first device, the second device, and the third device may communicate with each other, and any one of the first device, the second device, and the third device may be used as a primary device in the system architecture. For example, when being used as a primary device in the system architecture, the third device may display an interface for deploying the first device, the second device, and the third device. For details, refer to related descriptions of FIG. 5. For example, when the third device is a television, a smart screen, or another device with a display, the third device may be configured to display an interface for deploying the first device, the second device, and the third device. In other words, a user may deploy the first device, the second device, and the third device by using the third device.

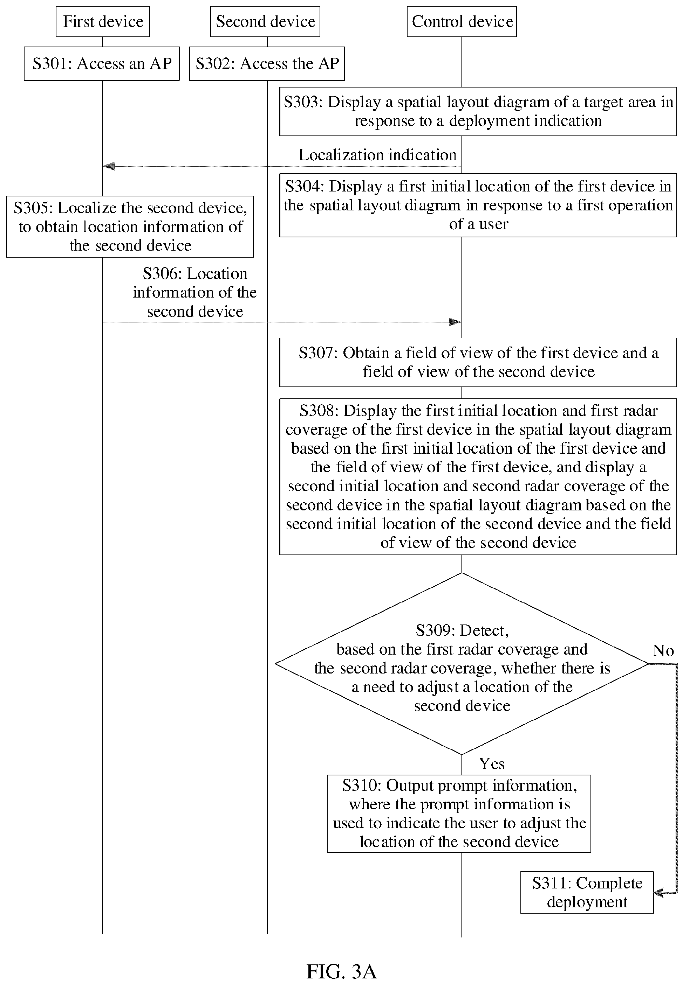

In the following embodiments, the system architecture in FIG. 2A is used as an example to describe a process in which the first device and the second device are networked and a process of deploying the first device and the second device. In the system architecture, the central control screen may be referred to as a control device. It should be understood that the system architecture shown in FIG. 2B may also perform methods provided in FIG. 3A, FIG. 3B, FIG. 7A and FIG. 7B, FIG. 9, and FIG. 11.

The communication method provided in embodiments of this application is described below with reference to specific embodiments. The following several embodiments may be combined with each other, and a same or similar concept or process may not be described repeatedly in some embodiments. FIG. 3A is a schematic flowchart of an embodiment of a communication method according to an embodiment of this application. Refer to FIG. 3A. The communication method provided in this embodiment of this application may include the following steps.

S301: A first device accesses an AP.

A user may operate the first device, for example, search for a network of the AP on the first device, and input a password of the network to access the AP. Alternatively, the user may connect the first device to the AP by using a control device. A manner in which the first device accesses the AP is not limited in embodiments of this application.

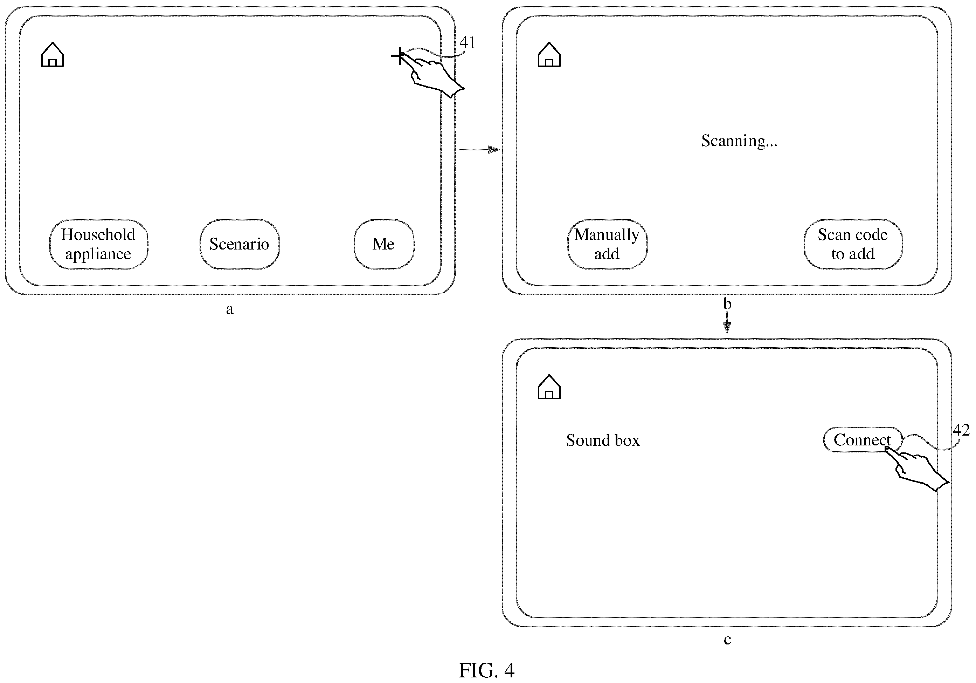

In FIG. 4, an example in which the first device is a sound box is used to describe a process in which the user connects the first device to the AP by using the control device. Refer to a in FIG. 4. The control device may display a device adding control 41. When the user operates the device adding control 41, the control device may be triggered to scan a device around the control device, as shown in b in FIG. 4. After the control device finds the first device through scanning, the control device may display the first device found through scanning. As shown in c in FIG. 4, the control device may display a name of the first device, for example, "Sound box", and a connect control 42. When the user operates the connect control 42, the control device may display an interface for inputting a password of a network. When the user inputs the password of the network, the first device may access the AP. FIG. 4 does not show a specific process in which the user inputs the password of the network.

S302: A second device accesses the AP.

For a manner in which the second device accesses the AP, refer to related descriptions in S301.

It should be understood that, after the first device accesses the AP and the second device accesses the AP, the first device and the second device may communicate with each other. In other words, the first device and the second device are successfully networked. For a specific principle of communication between the first device and the second device, refer to related descriptions in the 802.15.4z protocol.

After both the first device and the second device access the AP, the user may first deploy the first device and the second device at initial locations, for example, deploy the first device at a first initial location, and deploy the second device at a second initial location. For example, a target area is an area in which the first device and the second device are to be deployed. For example, the target area may be a home of the user. The home includes a plurality of rooms. The user may deploy the first device in a room 1, and deploy the second device in a room 2, or the user may deploy the first device and the second device in one room.

The first initial location is used as an example to describe the initial locations of the first device and the second device. The first initial location may be at a corner of a room and at a preset distance from a floor, or the first initial location may be on a ceiling of the room. A deployment location of the first device is not limited in embodiments of this application. In an embodiment, the first initial location may be at the corner of the room and at the preset distance from the floor. In this way, when an antenna field of view (field of view) of the first device reaches 90°, radar pulses can completely cover the room, so that this embodiment of this application can be applied to different types of radar devices.

In an embodiment, the first device may alternatively be in wired connection to the second device, to complete networking. In the embodiment, the first device and the second device may alternatively be in wired connection to a central control screen and the AP.

The first device and the second device being networked may be considered as a prerequisite for deploying the first device and the second device. It should be understood that, when the first device and the second device are networked, the first device and the second device may be deployed at least once.

S303: The control device displays a spatial layout diagram of the target area in response to a deployment indication.

The target area is the area in which the first device and the second device are to be deployed. For example, the target area may be the home of the user. The spatial layout diagram of the target area may be a two-dimensional spatial layout diagram or a three-dimensional spatial layout diagram. A type of the spatial layout diagram is not limited in embodiments of this application. For example, the target area is the home. The spatial layout diagram of the target area includes a layout of a room in the target area and a size of each room. For example, a size of a room may be represented by a length, a width, and a height.

In an example, the user may operate the control device to trigger deployment of the first device and the second device, so that the control device can display the spatial layout diagram of the target area. For example, with reference to a in FIG. 5, the control device is a central control screen, and the central control screen displays a radar deployment control 51. When the user operates the radar deployment control 51, deployment of the first device and the second device may be triggered. The user operating the radar deployment control 51 may be understood as a deployment indication. It should be understood that in FIG. 5, an example in which the spatial layout diagram of the target area is a top view of the target area is used for description.

In an embodiment, after the user operates the radar deployment control 51, the user may further select a to-be-deployed device on the central control screen. For example, the user may select the first device and the second device. In this case, the central control screen may determine that to-be-deployed devices are the first device and the second device.

In an example, if the spatial layout diagram of the target area is already stored in the control device, the control device may directly display the spatial layout diagram of the target area in response to the deployment indication. For example, if the user has input the spatial layout diagram of the target area when deploying a sound box in the home on the central control screen previously, the spatial layout diagram of the target area has been stored in the control device. Correspondingly, the control device may display the spatial layout diagram of the target area in response to operating the radar deployment control 51 by the user.

In an example, if the spatial layout diagram of the target area is not stored in the control device, the control device may output second prompt information in response to the deployment indication, to prompt the user to input the spatial layout diagram of the target area. A manner in which the user inputs the spatial layout diagram of the target area is not limited in embodiments of this application. For example, the user may input a picture of the spatial layout diagram of the target area, or edit the spatial layout diagram of the target area on the control device.

For example, with reference to b in FIG. 5, when the user operates the radar deployment control 51, the control device may display an interface for inputting the spatial layout diagram of the target area. Refer to c in FIG. 5. After the user inputs the spatial layout diagram of the target area, the control device may display the spatial layout diagram of the target area. It should be understood that a style of the interface of the control device described in this embodiment of this application is merely an example, and does not constitute display of the interface of the control device. In addition, FIG. 5 does not show a process in which the user inputs the spatial layout diagram of the target area.

S304: The control device displays the first initial location of the first device in the spatial layout diagram in response to a first operation of the user.

A manner of interaction between the user and the control device is not limited in embodiments of this application. The user may interact with the control device by operating an interface of the control device, or the user may interact with the control device in a voice manner.

For example, the user interacts with the control device by operating an interface of the control device. The user may select a location in the spatial layout diagram of the target area, and the location is used to deploy the first device. For example, with reference to c in FIG. 5, the user may tap a location A in the spatial layout diagram of the target area, and the location A is used to deploy the first device. For example, the location A may be the first initial location, and an operation of tapping the location A in the spatial layout diagram of the target area by the user may be used as the first operation. It should be understood that, in this embodiment of this application, operations such as zooming in, zooming out, and rotating performed by the user on the spatial layout diagram may be further supported, to help the user determine the first initial location in the spatial layout diagram.

It should be understood that FIG. 5 is a top view of the spatial layout diagram, and a distance between the location A and a floor is not shown.

S305: The first device localizes the second device, to obtain location information of the second device.

In an example, the control device may send a localization indication to the first device in response to the deployment indication. The localization indication indicates the first device to start to localize the second device. Similarly, the control device may further send a localization indication to the second device in response to the deployment indication. The localization indication indicates the second device to start to localize the first device. In other words, because the user may select, on the control device, the first device and the second device that are to be deployed, the control device may trigger, in response to the deployment indication, the to-be-deployed devices to localize each other.

In an example, after the user deploys the first device to the first initial location and deploys the second device to the second initial location, the user may actively trigger the first device to localize the second device.

When localizing the second device, the first device may obtain the location information of the second device. Based on a UWB localization principle, when localizing the second device, the first device may obtain a distance between the first device and the second device and an angle of the second device relative to the first device.

In this embodiment of this application, it is assumed that the first device constructs a three-dimensional coordinate system by using a location of the first device as an origin, and coordinates of the first device in the three-dimensional coordinate system may be referred to as first coordinates. The first device may determine coordinates of the second device in the three-dimensional coordinate system based on the distance between the first device and the second device and the angle of the second device relative to the first device. The location information of the second device includes the coordinates of the second device in the three-dimensional coordinate system, and the coordinates of the second device in the three-dimensional coordinate system may be referred to as second coordinates. In an example, three axes of the three-dimensional coordinate system may be predefined.

It should be understood that, if to-be-deployed devices further include a third device and a fourth device, the first device may further localize the third device and the fourth device, to obtain coordinates of the third device in the three-dimensional coordinate system and coordinates of the fourth device in the three-dimensional coordinate system. In other words, the first device may localize another to-be-deployed device, to obtain coordinates of each device.

Similarly, the second device may localize the first device, to obtain location information of the first device. For the location information of the first device, refer to related descriptions of the location information of the second device. In other words, a plurality of to-be-deployed devices may localize each other, to obtain coordinates of each device.

In an embodiment, a primary device may be determined from the first device and the second device. The primary device is configured to interact with the control device, and may further perform other calculation processing. For example, a primary device may be a device having a strong processing capability, such as a television or a smart screen.

In an example, when the user selects, on the control device, the first device and the second device that are to be deployed, the user may further select a primary device from the first device and the second device. In this example, an example in which the first device is a primary device is used, and the control device may send a notification message to the first device and the second device, to notify the first device and the second device that the first device is a primary device.

In an example, after being successfully networked, the first device and the second device may determine a primary device. For example, the first device may send capability information of the first device to the second device, and the second device sends capability information of the second device to the first device. The first device may determine, based on the capability information of the first device and the capability information of the second device, a device having a stronger processing capability as a primary device. The second device may also determine, based on the capability information of the first device and the capability information of the second device, a device having a stronger processing capability as a primary device. Capability information represents a processing capability of a device. For example, the capability information may include a type of a processor, a storage capacity, an operating frequency, a processing capability supported by the device (for example, whether a floating-point operation is supported), and the like. For example, when the capability information includes the storage capacity, a device having a largest storage capacity may be used as a primary device.

It should be understood that, because the first device and the second device may determine the primary device by using same logic, the primary device determined by the first device is the same as the primary device determined by the second device. Alternatively, after determining the primary device, the first device and the second device may notify each other of their respective determined primary device, to determine an accurate primary device. The primary device may notify another device that the primary device is a primary device.

S306: The first device sends the location information of the second device to the control device.

In an embodiment, when the first device is a primary device, the first device may send the location information of the second device to the control device, and the second device may not send the location information of the first device to the control device. In other words, the primary device may obtain location information of another UWB device, and send the location information of the another UWB device to the control device.

When the first device sends the location information of the second device to the control device, an identifier of the second device may be carried, to help the control device identify the second device. The identifier of the second device may include but is not limited to a name of the second device, a name customized by the user for the second device, or the like. In an example, in a process of localizing the second device, the first device may obtain the identifier of the second device. For example, the first device may send a data frame to the second device, to localize the second device, and the second device may include the identifier of the second device in a message for feeding back the data frame.

In an embodiment, when sending the location information of the second device to the control device, the first device may further send information about the three-dimensional coordinate system, so that the control device may determine a location of the second device in the spatial layout diagram based on the three-dimensional coordinate system. The location of the second device may be the second initial location. The information about the three-dimensional coordinate system may include information about the three axes of the three-dimensional coordinate system.

In an embodiment, if the three-dimensional coordinate system is predefined, the information about the three-dimensional coordinate system may be pre-stored in the control device, and the first device may not send the information about the three-dimensional coordinate system to the control device.

In an embodiment, when the primary device is not determined, the first device may send the location information of the second device to the control device, and the second device may send the location information of the first device to the control device. For a manner in which the second device sends the location information of the first device to the control device, refer to related descriptions of the first device sending the location information of the second device to the control device.

In an example, S305 and S306 may be considered as a process in which the control device obtains the location information of the second device.

S307: The control device obtains a field of view of the first device and a field of view of the second device.

In an embodiment, when the primary device is not determined, the first device may send the field of view of the first device to the control device when sending the location information of the second device to the control device, and the second device may send the field of view of the second device to the control device when sending the location information of the first device to the control device. In other words, each UWB device may send its own location information and field of view to the controller.

In an embodiment, for example, when the first device is a primary device, the first device may request the field of view of the second device from the second device when localizing the second device, and the second device may send the field of view of the second device to the first device in response to the request. In this way, the first device may obtain the field of view of the second device. In the embodiment, when sending the location information of the second device to the control device, the first device may send the field of view of the first device and the field of view of the second device to the control device. In other words, the primary device may obtain location information and a field of view of another UWB device, and send a field of view of the primary device and the location information and the field of view of the another UWB device to the control device.

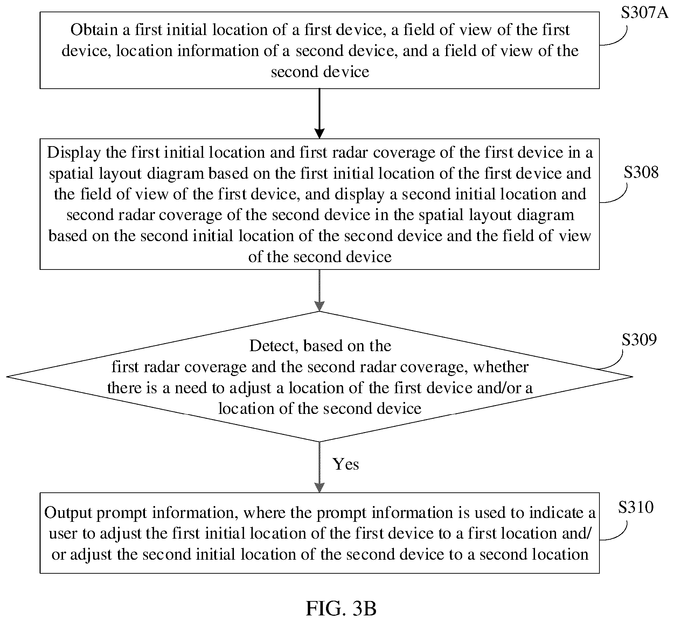

In an example, S303 and S304 are optional steps. In the example, with reference to FIG. 3B, if the spatial layout diagram of the target area is stored in the control device, S307 may be replaced with S307A: In response to the deployment indication, the control device may not display the spatial layout diagram of the target area, but obtain the first initial location of the first device, the field of view of the first device, the location information of the second device, and the field of view of the second device. When the control device obtains the first initial location of the first device, the field of view of the first device, the location information of the second device, and the field of view of the second device, the control device may perform S308 to S311. It should be noted that S311 is not shown in FIG. 3B.

For a process in which the control device obtains the field of view of the first device, the location information of the second device, and the field of view of the second device, refer to related descriptions in S305 to S307. In an example, the first initial location may be a preset location. For example, the preset location is a corner of a living room. The control device may predetermine the first initial location. In an example, the second device may localize the first device, to obtain the location information of the first device. The location information of the first device includes the first initial location. In this way, regardless of whether the first device used as a primary device sends the location information of the first device to the control device or the second device sends the location information of the first device to the control device, the control device can obtain the first initial location.

In an embodiment, steps shown in FIG. 3B may alternatively be performed by the first device.

S308: The control device displays the first initial location and first radar coverage of the first device in the spatial layout diagram based on the first initial location of the first device and the field of view of the first device, and displays the second initial location and second radar coverage of the second device in the spatial layout diagram based on the second initial location of the second device and the field of view of the second device.

After obtaining the first initial location of the first device and the field of view of the first device, the control device may determine radar coverage of the first device in the target area, namely, the first radar coverage.

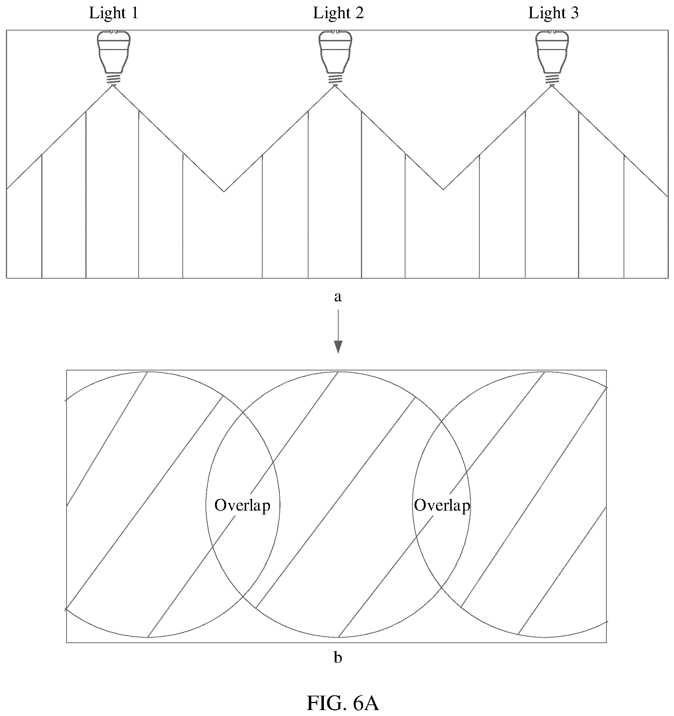

In an example, when the first device is deployed on a ceiling of a room, that is, when the first initial location is on the ceiling of the room, the primary device may determine the first radar coverage based on a height of the ceiling (namely, a height of the room) and the field of view of the first device. The first radar coverage is a range in which radar pulses of the first device cover a floor of the room. a in FIG. 6A is a side view of the spatial layout diagram, in which three UWB devices are included. All the three UWB devices are lights. a in FIG. 6A shows radar coverage of the three lights in a side view. b in FIG. 6A is a top view of the spatial layout diagram, in which radar coverage of the three lights in a top view is included. It should be noted that b in FIG. 6A shows ranges in which radar pulses transmitted by the three lights cover a floor of a room respectively. It should be understood that in FIG. 6A, a shadow represents radar coverage.

In an example, when the first device is deployed at a corner of a room, because the first device can completely cover the corner provided that the field of view of the first device exceeds 90°, the first radar coverage of the first device is related to a distance that can be reached by a radar pulse transmitted by the first device. To be specific, the first radar coverage is a range that is at a preset distance from the first device, and the preset distance is the distance that can be reached by the radar pulse transmitted by the first device.

Similarly, the control device may determine radar coverage of the second device in the target area, namely, the second radar coverage, based on the second initial location of the second device and the field of view of the second device. For details, refer to related descriptions of the first device.

After obtaining the first radar coverage and the second radar coverage, the control device may display the first initial location and the first radar coverage of the first device and the second initial location and the second radar coverage of the second device in the spatial layout diagram. As shown in d in FIG. 5, the central control screen may show that the first initial location is a location A, the second initial location is a location B, the first radar coverage is an area 1, and the second radar coverage is an area 2.

S309: The control device detects, based on the first radar coverage and the second radar coverage, whether there is a need to adjust a location of the second device. If there is a need to adjust the location of the second device, perform S310, or if there is no need to adjust the location of the second device, perform S311.

The control device may determine, based on the first radar coverage and the second radar coverage, whether there is an overlap between the first radar coverage and the second radar coverage. For example, when the first device is deployed on the ceiling of the room, as shown in b in FIG. 6A, there is an overlap between ranges in which radar pulses transmitted by a light 1 and a light 2 cover the floor of the room, and the control device may determine that there is an overlap between the first radar coverage and the second radar coverage.

In an example, when there is an overlap between the first radar coverage and the second radar coverage, it indicates that no blind area of radar coverage exists in deployment of the first device and the second device. In this way, it can be ensured that the deployed UWB device can accurately sense an object in the target area. When there is no overlap between the first radar coverage and the second radar coverage, it indicates that a blind area of radar coverage exists in deployment of the first device and the second device.

In the example, when there is an overlap between the first radar coverage and the second radar coverage, the control device determines that there is no need to adjust the location of the second device. When there is no overlap between the first radar coverage and the second radar coverage, the control device determines that there is a need to adjust the location of the second device.

In an example, when there is an overlap between the first radar coverage and the second radar coverage, the control device may further detect, based on radar coverage in the target area, whether an area out of radar coverage still exists in the target area. When an area out of radar coverage exists in the target area, the control device determines that there is a need to adjust the location of the second device. When no area out of radar coverage exists in the target area, the control device determines that there is no need to adjust the location of the second device.

In an example, S309 may alternatively be replaced with the following: the control device detects, based on the first radar coverage and the second radar coverage, whether there is a need to adjust a location of the first device and/or a location of the second device.

When there is an overlap between the first radar coverage and the second radar coverage, the control device determines that there is no need to adjust the location of the second device and/or the location of the first device. When there is no overlap between the first radar coverage and the second radar coverage, the control device determines that there is a need to adjust the location of the second device and/or the location of the first device.

When an area out of radar coverage exists in the target area, the control device determines that there is a need to adjust the location of the second device and/or the location of the first device. When no area out of radar coverage exists in the target area, the control device determines that there is no need to adjust the location of the second device and/or the location of the first device.

S310: The control device outputs prompt information, where the prompt information indicates the user to adjust the location of the second device.

When the control device determines that there is a need to adjust the location of the second device, in a first case, the control device may determine an adjusted location of the second device, namely, a second location, based on the location of the first device, the first radar coverage, the location of the second device, and the second radar coverage. In an example, the prompt information output by the control device in S310 may be referred to as first prompt information.

For example, when there is no overlap between the first radar coverage and the second radar coverage, the control device may shift the location of the second device toward the first device by a preset distance, calculate new radar coverage of the second device after the location shift, and detect whether there is an overlap between the first radar coverage and the new radar coverage of the second device. When there is an overlap between the first radar coverage and the new radar coverage of the second device, the control device may use a location of the second device after the shift as the second location of the second device. When there is no overlap between the first radar coverage and the new radar coverage of the second device, the control device may continue to shift a location of the second device toward the first device by a preset distance, and calculate new radar coverage of the second device after the location shift. This is repeated until there is an overlap between the first radar coverage and new radar coverage of the second device, to determine the second location of the second device.

In a second case, the control device may determine an adjusted location of the second device, namely, a second location, based on the location of the first device, the first radar coverage, the location of the second device, the second radar coverage, and a blind area of radar coverage in the target area. For example, the control device may gradually shift the location of the second device toward the blind area of radar coverage in the target area, to make new radar coverage of the second device cover the blind area of radar coverage while it is ensured that there is an overlap between the first radar coverage and the second radar coverage. For a manner of shifting the second device, refer to related descriptions in the "first case". In the example, the control device may also determine the second location of the second device.

In the examples shown in the "first case" and the "second case", the control device may determine the second location of the second device, and the control device may output prompt information. The prompt information indicates the user to adjust the second initial location of the second device to the second location.

In an embodiment, S310 may be replaced with the following: the control device outputs prompt information, where the prompt information indicates the user to adjust the first initial location of the first device to a first location and/or adjust the second initial location of the second device to a second location.

In this embodiment, for example, the prompt information indicates the user to adjust the first initial location of the first device to the first location and adjust the second initial location of the second device to the second location. When there is no overlap between the first radar coverage and the second radar coverage, the control device may shift the location of the second device toward the first device by a preset distance and shift the location of the first device toward the second device by a preset distance, and calculate new radar coverage of the second device after the location shift and new radar coverage of the first device after the location shift, to detect whether there is an overlap between the new radar coverage of the first device and the new radar coverage of the second device. When there is an overlap between the new radar coverage of the first device and the new radar coverage of the second device, the control device may use a location of the second device after the shift as the second location of the second device, and use a location of the first device after the shift as the first location of the first device.

When there is no overlap between the new radar coverage of the first device and the new radar coverage of the second device, the control device may continue to shift a location of the second device toward the first device by a preset distance and shift a location of the first device toward the second device by a preset distance, and calculate new radar coverage of the second device after the location shift and new radar coverage of the first device after the location shift. This is repeated until there is an overlap between new radar coverage of the first device and new radar coverage, to determine the first location of the first device and the second location of the second device.

Similarly, the control device may alternatively shift the location of the first device and the location of the second device toward a blind area of radar coverage in the target area, to make new radar coverage of the second device cover the blind area while it is ensured that there is an overlap between the first radar coverage and the second radar coverage. For details, refer to related descriptions in the "second case".

In this embodiment, the control device may determine the first location of the first device and the second location of the second device, and the control device may output prompt information. The prompt information indicates the user to adjust the first initial location of the first device to the first location and adjust the second initial location of the second device to the second location.

In a third case, the control device may alternatively directly output prompt information, to prompt the user to move the second device toward the first device, or the control device may output prompt information, to prompt the user to move the first device toward the second device and move the second device toward the first device.

For example, the prompt information is used to prompt the user to move the second device toward the first device. In a process in which the user moves the second device, the first device may localize the second device in real time, and report a location of the second device to the control device, so that the control device can determine a new location of the second device and new radar coverage of the second device in real time. In an example, the control device may display a new location of the second device and new radar coverage of the second device in the spatial layout diagram in real time.

In an example, the user may view a new location of the second device and new radar coverage of the second device displayed in the spatial layout diagram, and stop moving the second device when there is an overlap between the first radar coverage and new radar coverage of the second device. Alternatively, the user may view a new location of the second device and new radar coverage of the second device displayed in the spatial layout diagram, and stop moving the second device when no blind area of radar coverage exists in the target area.

In an example, the control device may perform real-time detection, and output prompt information when there is an overlap between the first radar coverage and new radar coverage of the second device, to prompt the user to stop moving the second device. Alternatively, when detecting that no blind area of radar coverage exists in the target area, the control device outputs prompt information, to prompt the user to stop moving the second device.

In an embodiment, the user may alternatively move the first device and the second device simultaneously, to facilitate adjustment of radar coverage in the target area.

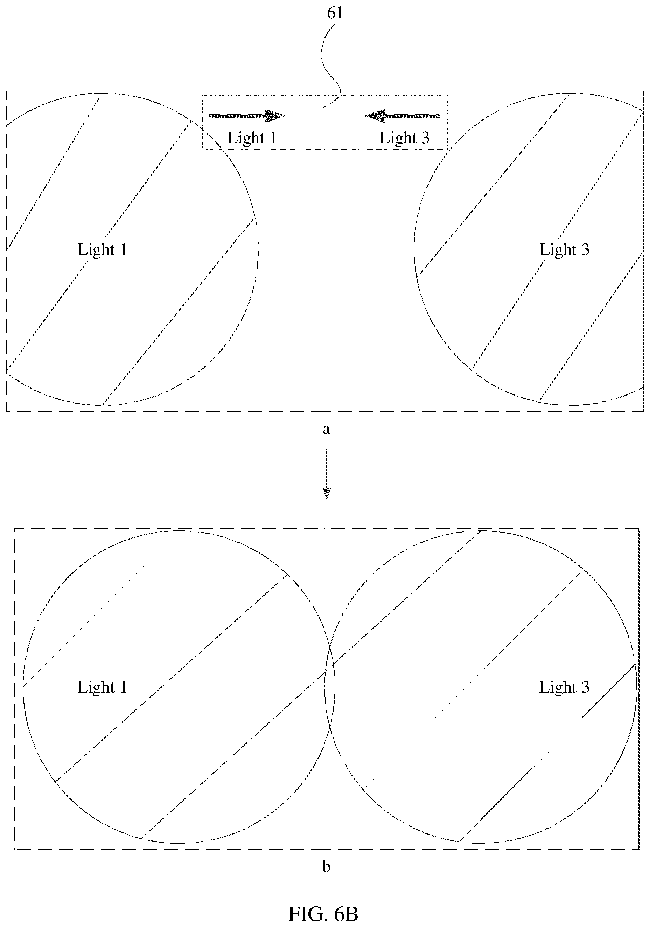

For example, with reference to a in FIG. 6B, when two UWB devices, a light 1 and a light 3, are in a room, and a blind area of radar coverage exists between radar coverage of the light 1 and the light 3, the control device may output prompt information 61, to prompt the user to move the light 1 toward the light 3 and move the light 3 toward the light 1. Refer to b in FIG. 6B. After the user moves the light 1 and the light 3, no blind area of radar coverage exists in the target area. In this way, the light 1 and the light 3 can accurately perform radar sensing on an object in the target area. It should be understood that in FIG. 6B, a top view is used as an example for description.

S311: Complete deployment of the first device and the second device.

When there is no need to adjust the location of the first device and the location of the second device, deployment of the first device and the second device is completed.

In FIG. 3A, a solution in which the user deploys the first device and the second device by using the control device is described. In an embodiment, the user may alternatively deploy the first device and the second device by using the first device or the second device. For example, the user deploys the first device and the second device on the first device. After both the first device and the second device access the AP, the first device may perform operations of the control device in S303 to S305 and S307 to S310.

In this embodiment of this application, UWB devices are used, and the UWB devices may communicate with each other, so that after the UWB devices access the AP, the UWB devices can perform ad hoc networking for communication. In addition, the UWB devices may localize each other, to determine locations of the UWB devices, and the control device may further determine radar coverage of the UWB device based on the location and a field of view of the UWB device. The control device may prompt, based on the location and the radar coverage of the UWB device, the user to adjust the location of the UWB device in time. The user can deploy the UWB device, an operation is simple, and efficiency is high.

In an embodiment, after the user deploys the first device and the second device for the first time, if the user adds a third device in the target area, a device fault exists in the first device and the second device, a location of the first device is changed, or a location of the second device is changed, the first device and the second device may detect addition, removal, a location change, or the like of a device, to adjust deployment of a UWB device.

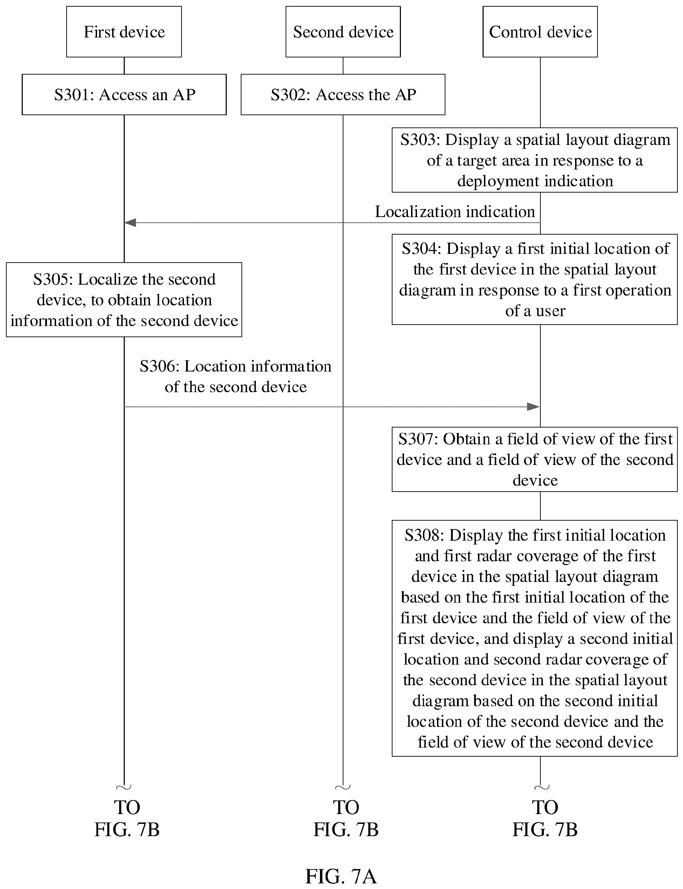

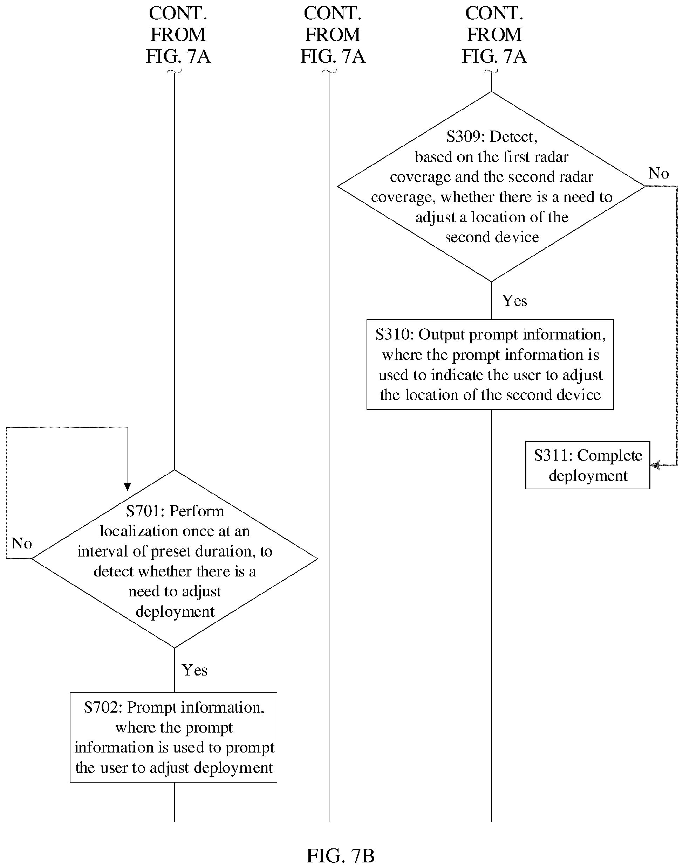

In this embodiment, with reference to FIG. 7A and FIG. 7B, after S310, S701 and S702 may be further performed. A communication method provided in an embodiment of this application may include the following steps.

S701: A first device performs localization once at an interval of preset duration, to detect whether there is a need to adjust deployment. If there is a need to adjust deployment, perform S702, or if there is no need to adjust deployment, return to S701.

The first device may perform localization once at an interval of preset duration, to detect whether there is a need to adjust deployment. Detecting whether there is a need to adjust deployment may be understood as detecting whether there is a need to adjust a location of the first device and a location of a second device.

The preset duration may be, for example, one day. The first device performs localization once at an interval of the preset duration, and may detect another UWB device that is in a same network as the first device, and further, may detect whether a UWB device is added in a target area, whether a UWB device is removed from the target area, whether a location of a deployed UWB device (for example, the first device and the second device) is changed, or the like. Correspondingly, the second device may also perform localization once at an interval of preset duration, to detect whether a UWB device is added in the target area, whether a UWB device is removed from the target area, whether a location of a deployed UWB device is changed, or the like. In an example, the preset duration in S701 may be referred to as first preset duration.

The first device is used as an example. When the first device detects that a UWB device is added in the target area, the first device may obtain a location of the added UWB device, the first device may send the location of the added UWB device to a control device, and the control device may obtain a field of view of the added UWB device. For details, refer to related descriptions in S305 to S307. In this case, the control device may determine radar coverage of the added UWB device based on the location of the added UWB device and the field of view of the added UWB device.

The control device may detect, based on the location of the first device, first radar coverage, the location of the second device, second radar coverage, the location of the added UWB device, and the radar coverage of the added UWB device, whether there is a need to adjust a location of a UWB device in the target area. When there is a need to adjust a location of a UWB device, the control device may output prompt information, to prompt a user to adjust the location of the UWB device. When there is no need to adjust a location of a UWB device, device deployment is completed. For details, refer to related descriptions in S309 to S311. Adjusting a location of a UWB device may be understood as adjusting a location of at least one device in "the first device, the second device, and the added UWB device" in the target area.

The first device is used as an example. When the first device detects that a UWB device is removed, for example, when the first device fails to localize the second device, according to this manner, the first device may send, to the control device, a message indicating that localization on the second device fails. In this case, the control device may output prompt information, to inform the user that localization on the second device fails. If there is another UWB device in the target area in addition to the second device, the control device may detect, based on the location and the first radar coverage of the first device and a location and radar coverage of the another UWB device, whether there is a need to adjust a location of a UWB device. For details, refer to related descriptions in S309 to S311.

The first device is used as an example. For example, the location of the second device is changed. When the first device detects that the location of the second device is changed, the first device may send a new location of the second device to the control device. The control device may detect, based on the location and the first radar coverage of the first device and the new location and new radar coverage of the second device, whether there is a need to adjust a location of a device. For details, refer to related descriptions in S309 to S311.

In an embodiment, when the location of the first device is changed, the second device may detect that the location of the first device is changed, and the second device may send a new location of the first device to the control device. The control device may detect, based on the location and the second radar coverage of the second device and the new location and new radar coverage of the first device, whether there is a need to adjust a location of a device. For details, refer to related descriptions in S309 to S311.

In an embodiment, when there is a primary device in the first device and the second device, for example, when the primary device is the first device, the first device may perform localization once at an interval of preset duration, to detect whether there is a need to adjust deployment, and there is no need for the second device to perform localization once at an interval of preset duration, so that power consumption of the second device can be reduced.

S702: Output prompt information, where the prompt information is used to prompt the user to adjust deployment.

In this embodiment of this application, when the control device determines that there is a need to adjust a location of a UWB device, the control device may output prompt information. The prompt information may include a new location of the to-be-adjusted device, and the new location is an adjusted location of the to-be-adjusted device. Alternatively, the control device may output prompt information, to indicate a movement direction of the to-be-adjusted device. For details, refer to related descriptions in S310. The to-be-adjusted device may be at least one device in "the first device, the second device, and the added UWB device". In an example, the prompt information in S701 and S702 may be referred to as third prompt information.

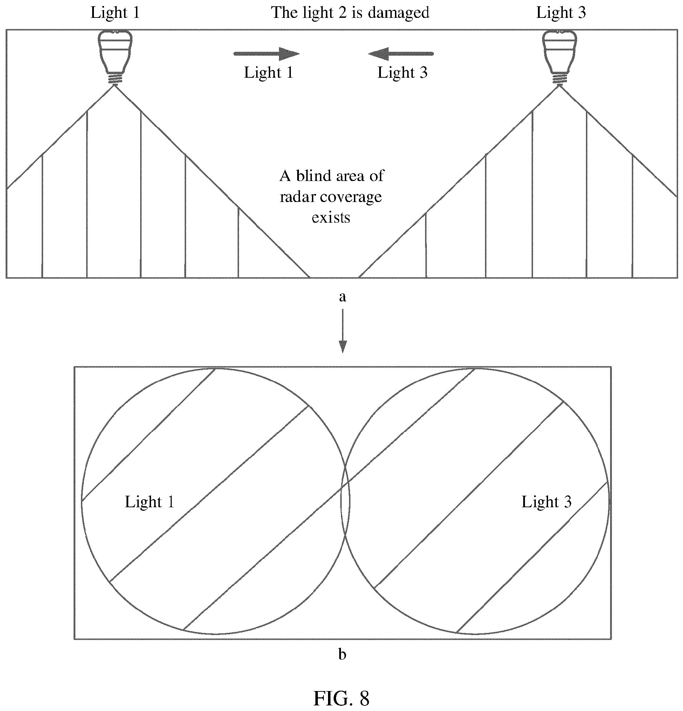

Refer to a in FIG. 8. After the user deploys a UWB device for the first time, three UWB devices are included in the target area: a light 1, a light 2, and a light 3. However, because the light 2 is damaged, both the light 1 and the light 3 fail to localize the light 2. The control device may recalculate radar coverage of the light 1 and the light 3, and determine that a blind area of radar coverage exists in the target area. Refer to b in FIG. 8. The control device may output prompt information, to prompt the user to move the light 1 toward the light 3 and move the light 3 toward the light 1. Refer to b in FIG. 8. There is an overlap between radar coverage of the light 1 and the light 3 after the movement, and no blind area of radar coverage exists in the target area. It should be understood that a in FIG. 8 is a side view, and b in FIG. 8 is a top view.

In this embodiment of this application, a UWB device may perform localization once at an interval of preset duration, to detect a location of a UWB device in the target area in time. When a UWB device is added in the target area, a device is removed from the target area, or a location of a deployed UWB device is changed, the control device may guide the user in time to adjust device deployment, to ensure accuracy of radar sensing.

After deployment of the first device and the second device is completed, the first device and the second device may work in collaboration to perform radar sensing. In the following embodiments, an example in which radar sensing includes "object detection and motion detection" is used to describe a process in which the first device and the second device work in collaboration to perform radar sensing. It should be understood that the object detection may be understood as follows: A location of an object is not changed, there is a need to sense whether an object exists in a target area, and a location or a physical sign of an object is detected. The motion detection may be understood as follows: A location of an object is changed, and a motion distance and a motion direction of the object are detected.

After deployment of the first device and the second device is completed, both the first device and the second device may be in a working state. It should be understood that, with the first device as an example, states of the first device may include a working state and a listening state. When the first device is in the listening state, the first device may turn off a transmitter and keep a receiver on. For example, the first device may receive a wake-up indication from the second device, and may not transmit a radar pulse. When the first device is in the working state, the first device may turn on a transceiver and keep the receiver on, to implement interaction with the second device and the control device, and may transmit a radar pulse, to perform radar sensing. It should be understood that, in addition to the working state and the listening state, the states of the first device may include another state such as an off state. Embodiments of this application relate to "the working state and the listening state" of the first device.

### Scenario 1: Object detection

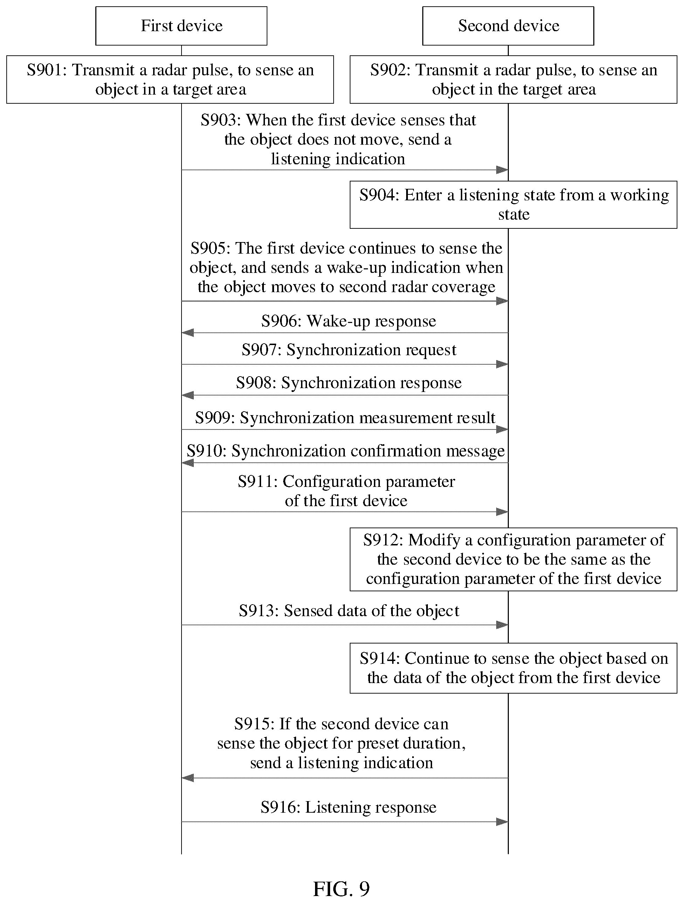

Refer to FIG. 9. A communication method provided in an embodiment of this application may include the following steps.

S901: A first device transmits a radar pulse, to sense an object in a target area.

After deployment of the first device and a second device is completed, the first device may transmit a radar pulse, to sense an object in the target area. In this embodiment of this application, a principle of sensing an object in the target area by the first device is not described in detail. In this embodiment of this application, an example in which the first device senses a breathing frequency of an object is used for description.

When the first device senses an object, it indicates that the object is within first radar coverage. In an example, the first device may sense whether the object moves. For example, the first device may sense a location of the object, to detect whether the object moves. When sensing that the location of the object is changed, the first device may determine that the object moves. When sensing that the location of the object is not changed, the first device may determine that the object does not move.

S902: The second device transmits a radar pulse, to sense an object in the target area.

For S902, refer to related descriptions in S901. S902 and S901 are not distinguished in a sequence, and may be performed simultaneously.

In an embodiment, if both the first device and the second device can sense an object, it indicates that the object is within an overlap between the first radar coverage and second radar coverage. In this embodiment, the first device and the second device may determine a device that continues to sense the object. For example, the first device may collect first strength of a reflected radar signal, the second device may collect second strength of a reflected radar signal, the first device may send the first strength to the second device, the second device may send the second strength to the first device, and both the first device and the second device may use a device with greatest strength in the first strength and the second strength as the device that continues to sense the object. For example, if the first device is determined as the device that continues to sense the object, the first device may perform S903.

In this embodiment, the first device may send the first strength to a control device, and the second device may send the second strength to the control device, or a primary device in the first device and the second device sends the first strength and the second strength to the control device. The control device may use a device with greatest strength in the first strength and the second strength as the device that continues to sense the object. For example, if the control device determines that the first device is a device with greatest strength, the control device may send an indication indicating to continue to sense the object to the first device, and the first device may perform S903. Alternatively, if the control device determines that the first device is a device with greatest strength, the control device may send an indication indicating to continue to sense the object to the first device, and send a listening indication to the second device.

S903: When the first device senses that the object does not move, the first device sends a listening indication to the second device.

Because the object is within the first radar coverage, the first device can accurately sense the object, and there is no need for another UWB device to perform sensing. In this case, the first device may send the listening indication to the second device. It should be understood that in this embodiment of this application, the "second device" represents another UWB device that is networked with the first device. The listening indication indicates the second device to enter a listening state from a working state, to reduce power consumption of the second device.

In an example, the first device may alternatively send a listening indication to the second device through the control device. For example, when the first device senses that the object does not move, the first device may send a listening indication to the control device. The listening indication includes an identifier of a device that is to listen. The control device may send, based on the listening indication, a listening indication to the device that is to listen (for example, the second device).

S904: The second device enters the listening state from the working state in response to the listening indication.

In an embodiment, the second device may send a listening response to the first device in response to the listening indication, to indicate that the second device enters the listening state.

It should be understood that when the second device receives the listening indication from the first device, if no object exists in the second radar coverage of the second device, that is, the second device does not sense an object, the second device may send the listening response to the first device in response to the listening indication, and enter the listening state from the working state, to reduce power consumption of the second device. When the second device receives the listening indication from the first device, if an object exists in the second radar coverage of the second device, that is, the second device is sensing the object in the second radar coverage, the second device may continue to maintain the working state, and does not send the listening response to the first device. In this embodiment of this application, an example in which the second device does not sense an object when the second device receives the listening indication is used for description.

S905: The first device continues to sense the object, and the first device sends a wake-up indication to the second device when the object moves to the second radar coverage.

The first device may periodically transmit a radar pulse, to continue to sense the object. According to the descriptions in S901, the first device may further sense whether the object moves. When the first device senses that the object moves toward the second device, and the object leaves the first radar coverage, the first device may send the wake-up indication to the second device. The wake-up indication is used to wake up the second device, to make the second device enter the working state from the listening state, so that the second device can continue to sense the object. In an example, to help the second device sense the object in time, the first device may send the wake-up indication to the second device when the sensed object moves toward the second device and the object is at a preset distance from a boundary of the first radar coverage.

In an example, a wake-up indication may alternatively be sent to the second device through the control device. For example, the first device may sense an object, and may send a location of the object to the control device in real time. The control device may send a wake-up indication to the second device when the object enters an area of an overlap between the first radar coverage and the second radar coverage. Alternatively, the control device may send a wake-up indication to the second device when the object is at a preset distance from a boundary of the second radar coverage.

S906: The second device enters the working state from the listening state in response to the wake-up indication, and sends a wake-up response to the first device.

S907: The first device sends a synchronization request to the second device, where the synchronization request is used to request the second device to perform clock synchronization with the first device.

S908: The second device sends a synchronization response to the first device in response to the synchronization request, where the synchronization response includes a clock of the second device.

S909: The first device sends a synchronization measurement result to the second device.

In response to the synchronization response from the second device, the first device may detect whether a clock of the first device is consistent with the clock of the second device, to determine whether to adjust the clock of the first device. When the clock of the first device is consistent with the clock of the second device, the first device determines that there is no need to adjust the clock of the first device. When the clock of the first device is inconsistent with the clock of the second device, for example, when the clock of the first device is slower or faster than the clock of the second device, the first device may adjust the clock of the first device to be consistent with the clock of the second device. The synchronization measurement result may include an adjusted clock of the first device.

S910: The second device sends a synchronization confirmation message to the first device in response to the synchronization measurement result when the clock of the first device is consistent with the clock of the second device.

The second device may detect, based on the synchronization measurement result from the first device, whether the clock of the first device is consistent with the clock of the second device. When the clock of the first device is consistent with the clock of the second device, the second device may send the synchronization confirmation message to the first device, to indicate that clock synchronization is completed. When the clock of the first device is inconsistent with the clock of the second device, S908 and S909 may be continued, to continue to perform clock synchronization until the clock of the first device is consistent with the clock of the second device.

S911: The first device sends a configuration parameter of the first device to the second device in response to the synchronization confirmation message.

The configuration parameter of the first device may include but is not limited to a channel and a bandwidth for transmitting a radar pulse and a sampling rate.

S912: The second device modifies a configuration parameter of the second device to be the same as the configuration parameter of the first device.

In this embodiment of this application, the second device may modify, based on the configuration parameter of the first device, the configuration parameter of the second device to be the same as the configuration parameter of the first device, so that the second device may continue to sense the object based on the configuration parameter that is the same as that of the first device, to ensure accuracy of sensing.

A breathing frequency of the sensed object is used as an example. The second device senses breathing of the object based on the configuration parameter that is the same as that of the first device. For example, the first device calculates a breathing frequency once every time the first device collects five data frames. In this case, the second device may continue to sense a breathing frequency of the object in a same manner, so that accuracy of sensing the breathing frequency can be ensured. It should be understood that the first device calculating a breathing frequency once every time the first device collects five data frames is an example for description. How the first device calculates a breathing frequency is not limited in embodiments of this application.

In an embodiment, the first device and the second device may perform clock synchronization and configuration parameter adjustment simultaneously. For example, the synchronization request in S907 may further carry a configuration parameter of the first device, so that the second device can keep a configuration parameter the same as that of the first device, to reduce signaling overheads. A manner of signaling interaction between the first device and the second device is not limited in embodiments of this application.

S913: The first device sends sensed data of the object to the second device.

For example, the first device senses a breathing frequency of the object. The first device may calculate a breathing frequency once every time the first device collects five data frames. The first device may send a breathing frequency obtained through calculation to the second device, and when a quantity of data frames collected by the first device is less than 5, the first device may send a collected data frame to the second device.

S914: The second device continues to sense the object based on the data of the object from the first device.

In this embodiment of this application, an objective of sending the sensed data of the object to the second device by the first device is to ensure continuity of sensing.

For example, when the first device has collected four data frames, the four data frames are insufficient for calculating a breathing frequency once, and the first device may send the collected four data frames to the second device. In this case, the second device can calculate a breathing frequency once when collecting one more data frame, with no need to wait for collection of another five data frames. In this way, the second device can quickly sense the object, so that continuity of sensing is ensured and a response delay is reduced.

S915: If the second device can sense the object for preset duration, the second device sends a listening indication to the first device.

In this embodiment of this application, after the second device enters the working state from the listening state, if the second device can sense the object for the preset duration, the second device may send the listening indication to the first device. The listening indication indicates the first device to enter a listening state from a working state. The second device does not send the listening indication to the first device as soon as the second device enters the working state, to avoid ping-pong switching of a state of the UWB device caused by back-and-forth motion of the object. In an example, the preset duration in S915 may be referred to as second preset duration.

For example, when the object moves back and forth, if the second device sends the listening indication to the first device as soon as the second device enters the working state, and as soon as the first device enters the listening state, the second device senses that the object moves to the first radar coverage, the first device needs to be woken up, and then the first device switches to the working state. As a result, the UWB device constantly switches between the listening state and the working state, causing ping-pong switching and power consumption of the UWB device.

S916: The first device sends a listening response to the second device.

The listening response indicates that the first device enters the listening state from the working state. For the first device sending the listening response to the second device, refer to related descriptions in S904.

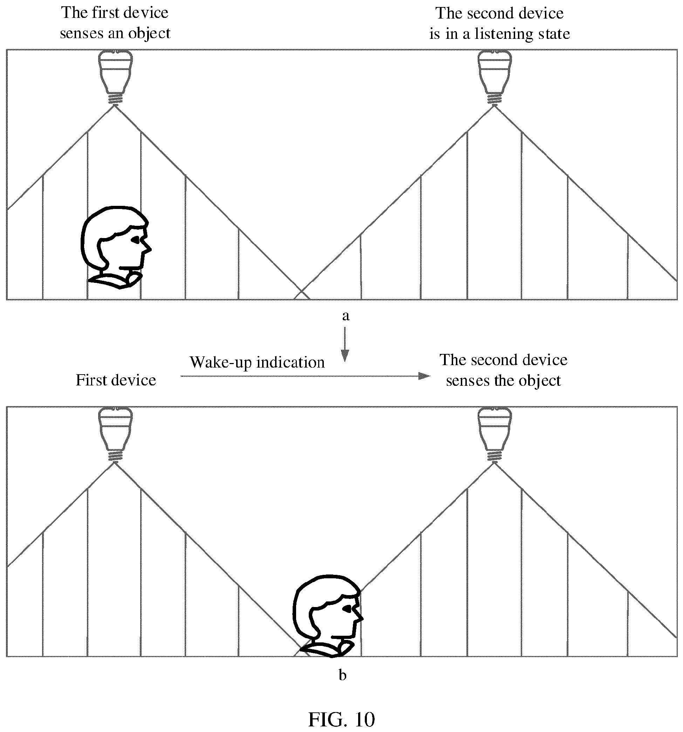

After deployment of the first device and the second device is completed, with reference to a in FIG. 10, when an object (for example, a user) is within the first radar coverage, the first device can sense the object, and the first device may indicate the second device to enter the listening state. Refer to b in FIG. 10. When the object moves to the overlap between the first radar coverage and the second radar coverage, or when the object is about to leave the first radar coverage, the first device may wake up the second device, and the second device may continue to sense the object.

In this embodiment of this application, in a scenario of object detection, the first device whose radar coverage is radar coverage in which an object is located may perform sensing, and another UWB device enters a listening state, so that power consumption of the UWB device can be reduced. In addition, when the object moves, a corresponding second device may be woken up to continue sensing, and the first device and the second device may perform clock synchronization, to ensure accuracy of sensing the object, and the first device may synchronize a configuration parameter of the first device and collected data of the object to the second device, to ensure continuity of sensing the object.

### Scenario 2: Motion detection

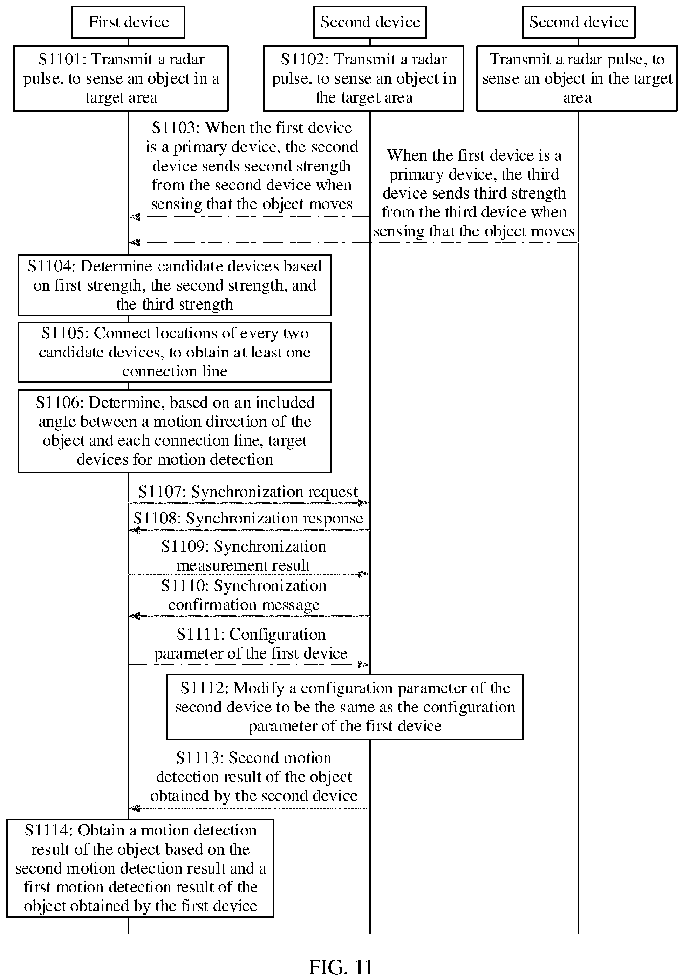

A difference from object detection lies in that a location of an object is changed in real time during motion detection, and at least two UWB devices are required for collaborative sensing. Refer to the system architecture shown in FIG. 2B. In an embodiment of this application, an example in which target devices include a first device, a second device, and a third device is used for description. In this embodiment, with reference to FIG. 11, a communication method provided in this embodiment of this application may include the following steps.

S1101: The first device transmits a radar pulse, to sense an object in a target area.

S1102: The second device transmits a radar pulse, to sense an object in the target area.

The third device may also transmit a radar pulse, to sense an object in the target area.

For S1101 and S1102, refer to the descriptions in S901 and S902.

S1103: When the first device is a primary device, the second device sends second strength from the second device to the first device when sensing that the object moves.

In this embodiment of this application, when an object moves, a UWB device may determine that motion of the object needs to be detected. To be specific, at least two UWB devices are required for collaborative sensing. In this case, target devices need to be selected from a plurality of UWB devices to perform collaborative sensing. In this embodiment of this application, an example in which the target devices include two UWB devices is used for description.

When the first device is a primary device, the second device may send the second strength from the second device to the first device when sensing that the object moves. In other words, the primary device may receive strength that is of a reflected radar signal and that is collected and sent by another UWB device. In this embodiment of this application, the second device represents the another UWB device.

Similarly, when the first device is a primary device, the third device sends third strength from the third device to the first device when sensing that the object moves. For the third strength, refer to related descriptions of the second strength.

S1104: The first device determines candidate devices based on first strength from the first device, the second strength, and the third strength.

The first device may use N devices whose strength is greater than a strength threshold as candidate devices based on strength that is of a reflected radar signal and that is collected by the first device (the first strength) and strength that is of a reflected radar signal and that is collected by another UWB device (for example, the second strength from the second device and the third strength from the third device). N is an integer greater than or equal to 2.

In an embodiment, when there is no primary device in UWB devices, a control device may perform actions of the first device in S1104 to S1106 and S1113 and S1114. For example, the first device may send the first strength to the control device, the second device may send the second strength to the control device, and the third device may send the third strength to the control device. The control device may use N devices whose strength is greater than a strength threshold as candidate devices based on the first strength, the second strength, and the third strength.

S1105: The first device connects locations of every two candidate devices, to obtain at least one connection line.

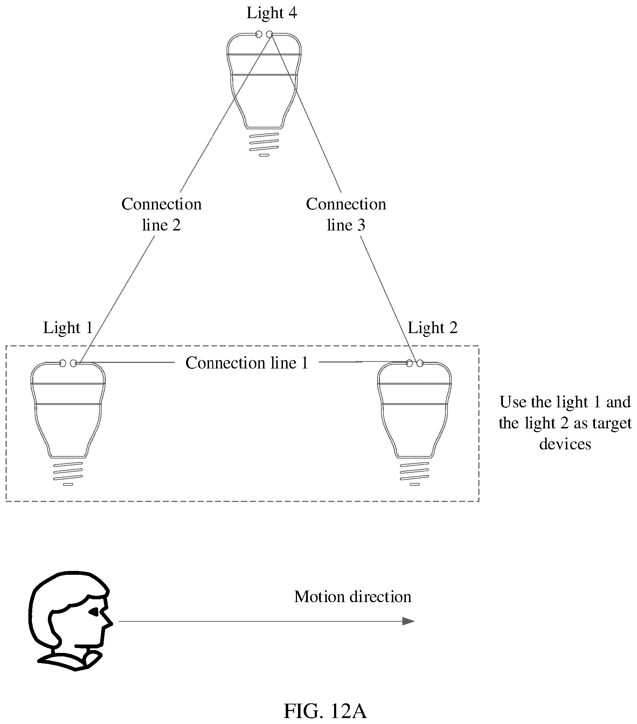

When the first device is a primary device, according to related descriptions of FIG. 3A, the first device may obtain a location of each UWB device. The first device may connect locations of every two candidate devices, to obtain at least one connection line. For example, with reference to FIG. 12A, the candidate devices include a light 1, a light 2, and a light 4. When the light 1 is the first device, the light 1 may connect the light 1, the light 2, and the light 4, to obtain a connection line 1 between the light 1 and the light 2, a connection line 2 between the light 1 and the light 4, and a connection line 3 between the light 2 and the light 4.

S1106: The first device determines, based on an included angle between a motion direction of the object and each connection line, target devices for motion detection.

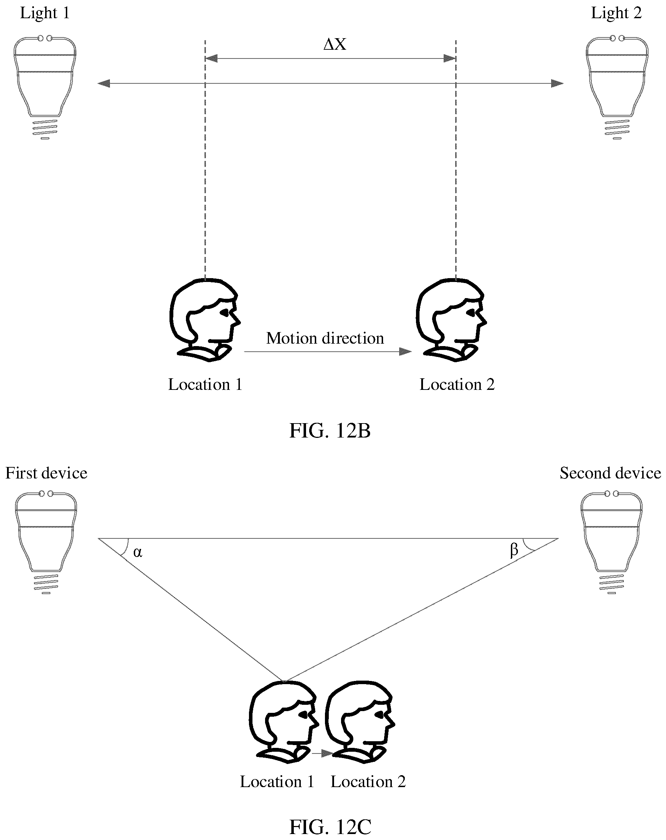

As shown in FIG. 12B, when an object (for example, a user) moves from a light 1 toward a light 2, for example, the object moves from a location 1 to a location 2, assuming that a connection line between the light 1 and the light 2 is parallel to a motion direction of the user, the user approaches the light 2 by "ΔX" while moving away from the light 1 by "ΔX". It should be understood that "ΔX" represents a distance. In other words, a motion distance of the object detected by the light 1 is ΔX, and a motion distance of the object detected by the second node is -ΔX. A motion distance of the object that may be obtained by combining detection results of the light 1 and the light 2 is 2ΔX. It is assumed that noise that is of a location of the user and that is sensed by the light 1 and the light 2 is n1 and n2 respectively. In this case, when the detection results of the light 1 and the light 2 are combined, n1 and n2 are canceled due to uncorrelation. Therefore, data integration is performed by using the detection results of the light 1 and the light 2, so that a higher signal-to-noise ratio can be obtained, that is, a more accurate motion distance of the user can be obtained.

Based on correlation analysis in FIG. 12B, the first device may use, based on the included angle between the motion direction of the object and each connection line, two UWB devices with a smallest included angle as target devices for motion detection. This can avoid impact of noise on motion detection, to obtain an accurate motion detection result. Refer to FIG. 12A. It is assumed that the object moves from the light 1 toward the light 2, and the connection line 1 between the light 1 and the light 2 is parallel to a motion direction of the object, that is, has a smallest included angle with the motion direction of the object. The first device may use the light 1 and the light 2 as target devices for motion detection.

In addition, based on a consideration that the motion direction of the object may be changed, the first device may continuously detect whether the included angle between the motion direction of the object and the connection line between the target devices exceeds an included angle threshold. If the included angle between the motion direction of the object and the connection line between the target devices exceeds the included angle threshold, it indicates that the included angle between the motion direction of the object and the connection line between the target devices is large, and noise affects a sensing result. The first device may perform S1104 and S1106 again, to obtain new target devices for motion detection. If the included angle between the motion direction of the object and the connection line between the target devices does not exceed the included angle threshold, there is no need to change the target devices.

S1107: When the target devices include the first device and the second device, the first device sends a synchronization request to the second device, where the synchronization request is used to request the second device to perform clock synchronization with the first device.

In an embodiment, when preset duration elapses after the target devices are determined, the first device may send a listening indication to another UWB device, to reduce power consumption of the another UWB device. In addition, it should be noted that, based on a consideration that the motion direction of the object may be changed, if the target device is changed, the first device may wake up a new target device to continue motion detection.

In this embodiment, when the target devices include the first device and the second device, the third device may enter a listening state from a working state, to reduce power consumption of the third device. For details, refer to related descriptions in Scenario 1.

S1108: The second device sends a synchronization response to the first device in response to the synchronization request, where the synchronization response includes a clock of the second device.

S1109: The first device sends a synchronization measurement result to the second device.

S1110: The second device sends a synchronization confirmation message to the first device in response to the synchronization measurement result when a clock of the first device is consistent with the clock of the second device.

S1111: The first device sends a configuration parameter of the first device to the second device in response to the synchronization confirmation message.

S1112: The second device modifies a configuration parameter of the second device to be the same as the configuration parameter of the first device.

For S1107 to S1112, refer to the descriptions in S907 to S912.

S1113: The second device sends a second motion detection result of the object obtained by the second device to the first device.

In an embodiment, a primary device, for example, the first device, may integrate motion detection results of the object obtained by the target devices, to obtain a motion detection result of the object. In this embodiment, after obtaining the second motion detection result of the object, the second device may send the second motion detection result to the first device. For example, the second running detection result may include a second motion distance of the object relative to the second device.

In an embodiment, the control device may integrate the motion detection results of the object obtained by the target devices, to obtain a motion detection result of the object. In this embodiment, after obtaining a first motion detection result of the object, the first device may send the first motion detection result to the control device; and after obtaining the second motion detection result of the object, the second device may send the second motion detection result to the control device. The first motion detection result may include a first motion distance of the object relative to the first device.

In this embodiment of this application, an example in which the first device integrates the motion detection results of the object obtained by the target devices is used for description.

S1114: The first device obtains a motion detection result of the object based on the second motion detection result and the first motion detection result of the object obtained by the first device.

The first device may perform operations such as summation and difference on the first motion detection result and the second motion detection result, to obtain the motion detection result of the object. For example, when the connection line between the target devices is parallel to the motion direction of the object, the first device may add the first motion distance to the second motion distance, to obtain a motion distance of the object.

Refer to FIG. 12C. When there is an included angle between the connection line between the target devices and the motion direction of the object, in FIG. 12C, an example in which both the first device and the second device are lights is used. The first device and the second device transmit radar pulses at a high frequency and at short periodicity. In a very short time, a motion distance of the object is small. An included angle α between the connection line between the target devices and a connection line between the first device and the object and an included angle β between the connection line between the target devices and a connection line between the second device and the object may be considered unchanged. The first device may calculate a motion distance of the object based on the included angle α between the connection line between the target devices and the connection line between the first device and the object, the included angle β between the connection line between the target devices and the connection line between the second device and the object, a first motion distance L1, and a second motion distance L2.

For example, a projection of the motion distance of the object on the connection line between the target devices may be represented as "L1·cosα-L2·cosβ". The first device may obtain the motion distance of the object based on the projection of the motion distance of the object on the connection line between the target devices, the first motion distance L1, the second motion distance L2, the included angle α, and the included angle β. This process is not described in detail in this embodiment of this application. It should be understood that in this embodiment of this application, detection of a motion distance of an object is used as an example of running detection for description. The communication method in this embodiment of this application may be further applied to another scenario of running detection. This is not limited in embodiments of this application. A process of integrating motion detection results of a plurality of UWB devices is not described in detail in this embodiment of this application. It should be understood that L1 and L2 are not shown in FIG. 12C.

In this embodiment of this application, in a scenario of motion detection, candidate devices may be determined with reference to strength that is of reflected radar signals and that is collected by UWB devices in a target area. In addition, in the candidate devices, target devices that have a smallest included angle with a motion direction of an object are selected based on a connection line between every two UWB devices and a running direction of the object. The target devices are used to perform motion detection. This can avoid impact of noise on accuracy of sensing, and therefore accuracy of motion detection is high. In addition, motion detection results sensed by the target devices may be integrated, to obtain an accurate motion detection result of the object.

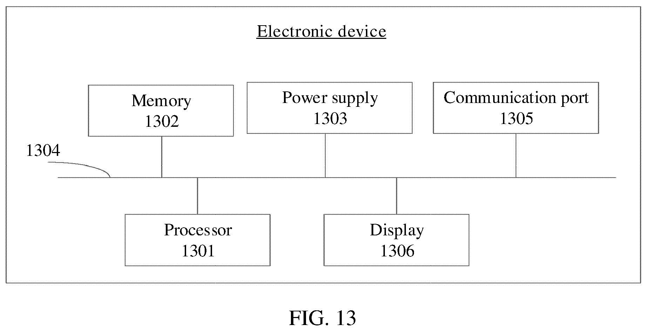

In an embodiment, an embodiment of this application further provides an electronic device. The electronic device may be the first device, the second device, or the control device in the foregoing embodiments. Refer to FIG. 13. The electronic device may include a processor 1301 (for example, a CPU) and a memory 1302. The memory 1302 may include a high-speed random access memory (random access memory, RAM), or may further include a non-volatile memory (non-volatile memory, NVM), for example, at least one disk memory. The memory 1302 may store various instructions, to complete various processing functions and implement method steps of this application.

Optionally, the electronic device in this application may further include a power supply 1303, a communication bus 1304, and a communication port 1305. The communication port 1305 is configured to implement connection and communication between the electronic device and another peripheral. In this embodiment of this application, the memory 1302 is configured to store computer-executable program code. The program code includes instructions. When the processor 1301 executes the instructions, the instructions enable the processor 1301 of the electronic device to perform actions in the foregoing method embodiments. Implementation principles and technical effects of this embodiment are similar to those of the method embodiments. Details are not described herein again.

In an embodiment, the electronic device may further include a display 1306. The display 1306 is configured to display an interface of the electronic device, to implement interaction with a user.

In an embodiment, an embodiment of this application further provides a communication system. The communication system may include a first device and a second device. In an example, the communication system may further include a control device.

It should be noted that the modules or components described in the foregoing embodiments may be configured as one or more integrated circuits for implementing the foregoing methods, for example, one or more application-specific integrated circuits (application-specific integrated circuits, ASICs), one or more microprocessors (digital signal processors, DSPs), or one or more field programmable gate arrays (field programmable gate arrays, FPGAs). For another example, when one of the foregoing modules is implemented in a form of a processing element scheduling program code, the processing element may be a general-purpose processor, for example, a central processing unit (central processing unit, CPU) or another processor, such as a controller, that may invoke the program code. For another example, the modules may be integrated together and implemented in a form of system-on-a-chip (system-on-a-chip, SOC).

All or some of the foregoing embodiments may be implemented by using software, hardware, firmware, or any combination thereof. When software is used to implement the embodiments, all or some of the embodiments may be implemented in a form of computer program product. The computer program product includes one or more computer instructions. When the computer program instructions are loaded and executed on a computer, all or some of procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid State Disk, SSD)), or the like.

The term "a plurality of" in this specification means two or more. The term "and/or" in this specification describes only an association relationship between associated objects and indicates that three relationships may exist. For example, A and/or B may indicate the following three cases: Only A exists, both A and B exist, and only B exists. In addition, the character "/" in this specification usually indicates an "or" relationship between associated objects, and the character "/" in a formula indicates a "division" relationship between associated objects. In addition, it should be understood that in the descriptions of this application, terms such as "first" and "second" are merely used for distinguishing and description, but shall not be understood as indicating or implying relative importance, or shall not be understood as indicating or implying a sequence.

It may be understood that various numbers in embodiments of this application are merely used for differentiation for ease of description, and are not used to limit the scope of embodiments of this application.

It should be understood that, in embodiments of this application, sequence numbers of the foregoing processes do not mean execution sequences. The execution sequences of the processes should be determined based on functions and internal logic of the processes, and shall not be construed as any limitation on implementation processes in embodiments of this application.

## Claims

1. A communication method, wherein both a first device and a second device are ultra-wideband devices, the first device and the second device are located in a target area, and the method comprises:
obtaining a first initial location of the first device, a field of view of the first device, location information of the second device, and a field of view of the second device;
displaying first radar coverage of the first device in a spatial layout diagram of the target area based on the first initial location of the first device and the field of view of the first device, and displaying second radar coverage of the second device in the spatial layout diagram based on the location information of the second device and the field of view of the second device; and
if it is detected, based on the first radar coverage and the second radar coverage, that there is a need to adjust a location of the first device and/or a location of the second device, outputting first prompt information, wherein the first prompt information is used to prompt a user to adjust the location of the first device and/or the location of the second device.

2. The method according to claim 1, wherein before the obtaining a first initial location of the first device and a field of view of the first device, the method further comprises:
displaying the spatial layout diagram; and
displaying the first initial location in the spatial layout diagram in response to a first operation of the user.

3. The method according to claim 1 or 2, wherein the method further comprises:
when there is an overlap between the first radar coverage and the second radar coverage, determining that there is no need to adjust the location of the first device and/or the location of the second device; or
when there is no overlap between the first radar coverage and the second radar coverage, determining that there is a need to adjust the location of the first device and/or the location of the second device.

4. The method according to claim 1 or 2, wherein the method further comprises:
detecting, based on the target area, the first radar coverage, and the second radar coverage, whether a blind area of radar coverage exists in the target area; and
if a blind area of radar coverage exists in the target area, determining that there is a need to adjust the location of the first device and/or the location of the second device; or
if no blind area of radar coverage exists in the target area, determining that there is no need to adjust the location of the first device and/or the location of the second device.

5. The method according to claim 2, wherein before the displaying the spatial layout diagram, the method further comprises:
if the spatial layout diagram is not stored in the first device, outputting second prompt information in response to a deployment indication, wherein the second prompt information is used to prompt the user to input the spatial layout diagram.

6. The method according to any one of claims 1 to 5, wherein the first prompt information comprises an adjusted location of the first device and/or an adjusted location of the second device.

7. The method according to any one of claims 1 to 6, wherein the method is applied to the first device, and the obtaining location information of the second device comprises:
localizing the second device, to obtain the location information of the second device.

8. The method according to claim 7, wherein the method further comprises:
receiving the field of view from the second device.

9. The method according to claim 2, wherein the method is applied to a control device, and the obtaining a field of view of the first device, location information of the second device, and a field of view of the second device comprises:
receiving the field of view of the first device, the location information of the second device, and the field of view of the second device from the first device, wherein the location information of the second device is obtained by the first device through localization; or
receiving the field of view of the first device from the first device; and
receiving the location information of the second device and the field of view of the second device from the second device.

10. The method according to any one of claims 1 to 8, wherein the method is applied to the first device, and the method further comprises:
performing localization once at an interval of first preset duration, to detect whether an ultra-wideband device is added in the target area, whether an ultra-wideband device is removed from the target area, whether the location of the first device is changed, or whether the location of the second device is changed;
if an ultra-wideband device is added in the target area, an ultra-wideband device is removed from the target area, the location of the first device is changed, or the location of the second device is changed, determining, based on a location and a field of view of an ultra-wideband device in the target area, radar coverage of the ultra-wideband device in the target area;
detecting, based on the radar coverage of the ultra-wideband device in the target area, whether there is a need to adjust the location of the ultra-wideband device in the target area, wherein when an ultra-wideband device is added in the target area, the ultra-wideband device in the target area comprises the first device, the second device, and the added ultra-wideband device; when an ultra-wideband device is removed from the target area, the ultra-wideband device in the target area comprises an unremoved device in the first device and the second device; or when the location of the first device or the location of the second device is changed, the ultra-wideband device in the target area comprises the first device and the second device; and
if there is a need to adjust the location of the ultra-wideband device in the target area, outputting third prompt information, wherein the third prompt information is used to prompt the user to adjust the location of the ultra-wideband device in the target area.

11. The method according to any one of claims 1 to 8 and 10, wherein the method is applied to the first device, and after deployment of the first device and the second device is completed, the method further comprises:
transmitting a radar pulse, to sense an object in the target area; and
when sensing that the object does not move, sending a listening indication to the second device, wherein the listening indication indicates the second device to enter a listening state from a working state.

12. The method according to claim 11, wherein after the sending a listening indication to the second device, the method further comprises:
continuing to sense the object, and sending a wake-up indication to the second device when the object moves to the second radar coverage, wherein the wake-up indication indicates the second device to enter the working state from the listening state, to continue to sense the object.

13. The method according to claim 12, wherein after the sending a wake-up indication to the second device, the method further comprises:
performing clock synchronization with the second device;
sending a configuration parameter of the first device to the second device, so that the second device adjusts a configuration parameter of the second device to be consistent with the configuration parameter of the first device; and
sending sensed data of the object to the second device.

14. The method according to claim 13, wherein after the sending sensed data of the object to the second device, the method further comprises:
receiving a listening indication from the second device, wherein the listening indication from the second device is sent after the second device is already in the working state for second preset duration; and
entering a listening state from a working state.

15. The method according to claim 11, wherein a third device is further located in the target area, the third device is an ultra-wideband device, and after the transmitting a radar pulse, the method further comprises:
when sensing that the object moves, receiving second strength from the second device and third strength from the third device, wherein the second strength is strength that is of a reflected radar signal and that is collected after the second device transmits a radar pulse, and the third strength is strength that is of a reflected radar signal and that is collected after the third device transmits a radar pulse;
determining, based on first strength from the first device, the second strength, and the third strength, at least two candidate devices whose strength is greater than a strength threshold, wherein the first strength is strength that is of a reflected radar signal and that is collected after the first device transmits a radar pulse;
connecting every two devices in the at least two candidate devices, to obtain at least one connection line; and
based on an included angle between a motion direction of the object and each connection line, using two devices on a connection line that has a smallest included angle with the motion direction of the object as target devices, wherein the target devices are configured to sense motion of the object.

16. The method according to claim 15, wherein when the target devices comprise the first device and the second device, after the using two devices on a connection line that has a smallest included angle with the motion direction of the object as target devices, the method further comprises:
performing clock synchronization with the second device;
sending a configuration parameter of the first device to the second device, so that the second device adjusts a configuration parameter of the second device to be consistent with the configuration parameter of the first device;
receiving a sensed second motion detection result of the object from the second device; and
obtaining a motion detection result of the object based on a first motion detection result that is of the object and that is sensed by the first device and the second motion detection result.

17. The method according to claim 15 or 16, wherein the method further comprises:
determining the first device as a primary device, wherein the primary device is configured to obtain a motion detection result of the object.

18. The method according to claim 17, wherein the determining the first device as a primary device comprises:
in response to an operation of determining the first device as a primary device by the user, determining the first device as a primary device; or
determining, with the second device and the third device, the first device as a primary device.

19. An electronic device, comprising a processor and a memory, wherein
the memory stores computer-executable instructions; and
the processor executes the computer-executable instructions stored in the memory, to enable the processor to perform the method according to any one of claims 1 to 18.

20. A computer-readable storage medium, wherein the computer-readable storage medium stores a computer program or instructions, and when the computer program or the instructions are run, the method according to any one of claims 1 to 18 is implemented.
